# EUROPEAN PATENT SPECIFICATION

(11) **EP 1 102 542 B1**
(45) Date of publication and mention of the grant of the patent: **19.10.2005**
(21) Application number: 99942000.3
(22) Date of filing: 03.08.1999
(51) Int. Cl.: A23B 5/04, A23B 5/055, A23B 5/10

(54) **USE OF CO2 COOLING IN TREATMENT OF POULTRY EGGS**
VERWENDUNG VON CO2-KÜHLUNG ZUR BEHANDLUNG VON GEFLÜGELEIERN
REFROIDISSEMENT AU CO2 POUR TRAITER DES OEUFS DE VOLAILLES DE BASSE-COUR

(30) Priority: 03.08.1998 US 95124 P
(43) Date of publication of application: 30.05.2001
(73) Proprietor: NORTH CAROLINA STATE UNIVERSITY, Raleigh, NC 27695-7003 (US); Auburn University, Auburn, AL 36849-5112 (US)
(72) Inventor: CURTIS, Patricia, Ann, McBride, Cary, NC 27513 (US); ANDERSON, Kenneth, Emil, Garner, NC 27529 (US); CONNER, Donald, Edward, Auburn, AL 36832 (US); HUGHES, LaVonda, Ann, Auburn, AL 36832 (US); KEENER, Kevin, M., Raleigh, NC 27607 (US)
(74) Representative: Chapman, Paul Gilmour
(86) International application number: PCT/US1999/017605
(87) International publication number: WO 2000/007453

(56) References cited:
- GB-A- 438 912
- GB-A- 2 297 234
- US-A- 5 167 976
- US-A- 5 474 794
- CURTIS P.A., ET AL.: "Cryogenic gas for rapid cooling of commercially processed shell eggs before packaging" JOURNAL OF FOOD PROTECTION, vol. 58, no. 4, 1995, pages 389-394, XP000856862 DES MOINES, IO, US ISSN: 0362-028X
- KNEHR,E.: "New Technologies: making progress in food preservation" FOOD PRODUCT DESIGN, vol. 7, no. 12, 1998, pages 87-95, XP000856715

## Description

### Field of the Invention

The present invention relates to methods of improving the safety and quality of shell eggs. In particular, the present invention concerns methods of improving the safety and quality of shell eggs by treating the eggs with cryogenic carbon dioxide gas.

### Background of the Invention

During commercial processing and packaging of raw shell poultry eggs, the eggs are typically candled (checked for cracks, checks and internal defects) and graded, washed and packaged for distribution to retail sales outlets. A typical procedure employed by commercial egg processing plants is to spray-wash the eggs with hot water containing detergent while scrubbing the exterior of the eggs with rotating brushes. After washing, the eggs are rinsed with fresh hot water to remove the detergent-containing wash water.

However, washing of the exterior of shell eggs does not affect spoilage organisms in the interior of the egg. Processed raw shell eggs are therefore typically stored at refrigerated temperatures to inhibit the growth of microorganisms within the egg contents. It is known that eggs may be contaminated with *Salmonella* species while within the hen (prior to formation of the eggshell and prior to laying).

United States Federal Regulations have imposed requirements that poultry eggs entering commercial packing houses must be washed with hot water at a temperature of least about 90° F (about 32.2° C). and at least about 20° F (about 11° C) higher than the temperature of the incoming raw shell egg having the highest temperature. Commercial egg processors in the United States thus often utilize wash water at about 115° F. (about 46° C.), with some processors keeping water temperature as high as about 125° F. (about 51.7° C). Many pathogenic and spoilage microorganisms proliferate at increased temperatures. For instance, it is known that *Salmonella* species proliferate at elevated temperatures, up to a point at which the heat is so great it kills the *Salmonella* organisms. Alternatively, as temperature declines, *Salmonella* activity declines until replication ceases at about 45° F (about 7° C) (*See, e.g.,* Anderson, "Refrigeration and Removal of Heat from Eggs," *Misset-World Poultry*, Vol. 9, No. 11 (November, 1993)).

Recently, state governments in various of the United States (including North Carolina, New York, and Pennsylvania) imposed regulations for post-processing cooling of shell eggs, requiring that raw shell eggs be kept at about 45° F (about 7° C). Egg processors thus typically keep raw shell eggs cool after packing (during storage and subsequent transport to retail outlets), and retailers typically keep raw shell eggs cool during storage before consumer purchase. Pending United States Federal legislation would require raw shell eggs to be kept at post-processing ambient temperatures of about 45° F (about 7° C).

A typical treatment of shell eggs involves collection of eggs at the commercial hen house, where the raw shell eggs are placed in pre-processing coolers and shipped to the packing house. The eggs are then brought into the packing room from the pre-processing coolers, placed on an unloader and moved onto a conveyance system ("spooler") by which they are taken into a washer and washed in hot water. After exiting the washer, the eggs are blown dry with ambient air and candled. Eggs are typically then packaged in 30-egg fibre flats stacked in cases (twelve flats per case, so that each case holds 30dozen eggs). The cases are stacked on a pallet holding 30 cases for a total of 900 dozen eggs per pallet. Some eggs are packaged in foamed polystyrene cartons or in fibre cartons (twelve eggs to a carton), instead of 30-egg fibre flats; these cartons are also then cased and palletized.

Egg pallets are typically placed in a final post-processing cooler or, where the cooler is large enough. palletizing of the cases is performed inside of the cooler. The packaged and palletized raw shell eggs may still be warm from the washing, and are placed in refrigerated storage rather than in shelf storage at room temperature. Many states in the United States require post-processing storage at refrigerated temperatures.

A general overview of the typical commercial procedures for processing raw shell eggs is provided by Anderson, "Refrigeration and Removal of Heat from Eggs," *Misset-World Poultry,* Vol. 9, No. 11 (November, 1993). This article further provides temperature profiles for raw shell eggs during processing, from the time of entry into the processing facility until placed in cold storage, awaiting shipment to retail outlets. The temperatures of the eggs and the time the eggs remained at those temperatures during various processing steps (transporting to the packing house, washing, drying, candling, packaging, and storing for eventual shipment to retail outlets) were measured.

As reported by Anderson (1993), internal temperatures of raw shell eggs (in off-line processing) were within about 2° F. (about 1.1° C.) of the surface (the outside of the shell) egg temperatures after a brief equilibration time. Egg temperature was measured as eggs awaited processing after being brought into the packing room from the pre-processing cooler and placed on the unloader; initial surface temperatures ranged from about 62° F. to about 68° F. (about 16.7° C. to about 20° C.) as processing started. Internal heating of the eggs began when eggs on the conveyance (spooler) entered the washer, and the surface temperature was about 105° F. (about 40.6° C.). As the eggs exited the washer, the surface temperature was about 109° F. (about 42.8° C.). As the washed eggs were blown dry with ambient air, the surface temperature was about 95° F. (about 35° C.). Where eggs are processed utilizing in-line processing, internal temperatures of raw shell eggs may be as high as about 94° F, 96° F, or even 98° F.

After palletizing in the processing room, and due to the high surface temperatures caused by the hot wash water, the internal temperatures of the raw shell eggs continued to rise. But at five minutes after processing, the surface temperatures dropped to about 76° F. to about 80° F. (about 24.4° C. to about 26.7° C.). These surface temperatures were still about 12° F. to about 14° F. (about 6.7° C. to about 7.7° C.) higher than when the eggs had been taken from the pre-processing coolers and were on the unloader awaiting processing. Some of the palletized eggs were not placed immediately inside of the post-processing coolers. Thus, these eggs were not subjected to immediate slow cooling inside of the coolers, but rather stayed warm from sitting in the ambient packing house atmosphere for as much as six hours till the pallets were finally placed inside of the coolers. Of course, eggs palletized inside of the coolers had faster temperature drops, but still the cooling still occurred over an extended period of time. In short, even after the eggs were inside of the coolers (whether or not palletized therein), the eggs stayed warm for many hours.

For raw shell eggs packaged in 30-egg fibre flats, palletized in the egg processing plant, and then moved for storage into the post-processing coolers, Anderson (1993) report that eggs at the center of the pallet required about 142 to 150 hours to reach the ambient temperature of the cooler. In general, those eggs near the pallet extremities equalized to the ambient temperature of the cooler in about 72 hours. For raw shell eggs packaged in foamed polystyrene cartons, the foamed polystyrene cartons further retard the cooling of the palletized eggs due to the decreased air movement and the insulative effect of the cartons.

As described in Anderson (1993), traditional commercial processing procedures may keep raw shell eggs warm for several days, during which time microbial growth within the eggs may occur. In view of the commercial handling of raw shell eggs and the known contamination of shell eggs by pathogenic microorganisms, methods of decreasing microbial contamination without adversely affecting the quality of the eggs are desirable. Due to the time period between collection of eggs at commercial hen houses and use by the consumer, methods of increasing shelf life of raw shell eggs are desirable. Further, due to consumer demand for eggs of high functional quality, methods of increasing or maintaining egg quality are desirable. It is further desirable to determine such methods that are suitable for use on checked eggs.

### Summary of the Invention

In view of the foregoing, a first aspect of the present invention is a method of improving the average quality of a plurality of raw shell eggs produced by hens at post-peak production age. The method comprises exposing the shell eggs to cryogenic carbon dioxide (CO₂) gas, for a time and temperature sufficient to cool the interior temperature of said shell egg to about 45°F or less but insufficient to cause freezing of the egg yolk or albumen. Exposure to cryogenic CO₂ gas occurs for a time period of not more than ten minutes. Immediately after such treatment, more of the plurality of eggs are graded A or AA than were graded A or AA prior to the cryogenic CO₂ treatment.

These and other aspects of the invention are set forth in more detail in the description of the invention below.

### Brief Description of the Drawings

**Figure 1** graphs average cooling curves for shell eggs cooled with cryogenic carbon dioxide (triangles) or by traditional cooling methods (squares).
**Figure 2** graphs average microbial counts over a ten-week period for shell eggs cooled with cryogenic carbon dioxide (B) or by traditional cooling (A).
**Figure 3** graphs average microbial counts for shell eggs cooled using cryogenic carbon dioxide gas and sweated (B) or non-sweated (A).
**Figure 4** graphs microbial growth over ten weeks, for shell eggs cooled with cryogenic carbon dioxide (circles; CO₂) or by traditional cooling methods (triangles; TC).
**Figure 5** graphs microbial growth over ten weeks post-processing, for shell eggs cooled with cryogenic carbon dioxide and either sweated (first bar) or non-sweated (second bar).
**Figure 6** graphs microbial growth for shell eggs cooled with cryogenic carbon dioxide (b) or by traditional cooling methods (a), and either sweated or non-sweated.
**Figure 7** compares microbial growth in intact shell eggs (B) and checked shell eggs (A) at eight and ten weeks post-processing; where post-processing cooling was by cryogenic CO₂.
**Figure 8** compares microbial growth in intact shell eggs and checked shell eggs at eight weeks post-processing; where post-processing cooling was by cryogenic CO₂ (B) or by traditional cooling (A).
**Figure 9** graphs Haugh units of shell eggs (obtained from past-peak hens) over twelve weeks, where post-processing cooling was by cryogenic carbon dioxide (diamonds) or by traditional cooling (squares).
**Figure 10** graphs Haugh units of shell eggs (obtained from peak period hens) over twelve weeks, where post-processing cooling was by cryogenic carbon dioxide (diamonds) or by traditional cooling (squares).
**Figure 11** graphs the vitelline membrane breaking force in shell eggs (obtained from past-peak hens) over ten weeks, where post-processing cooling was by cryogenic carbon dioxide (squares; CO₂) or by traditional cooling (circles; TC).
**Figure 12** graphs the vitelline membrane breaking force in shell eggs (obtained from peak period hens) over ten weeks, where post-processing cooling was by cryogenic carbon dioxide (triangles; CO₂) or by traditional cooling (circles; TC).
**Figure 13** graphs vitelline membrane relative elasticity of shell eggs over ten weeks, where post-processing cooling was by cryogenic carbon dioxide (solid line; CO₂) or by traditional cooling (broken line; TC).
**Figure 14** demonstrates the effects of cryogenic and traditional cooling on *Salmonella enteritidis* population in inoculated eggs.
**Figure 15** demonstrates the effect of cryogenic and traditional cooling on *Salmonella enteritidis* population during long-term storage of inoculated eggs. The first bar in each set represents the cryogenically-cooledeggs, and the second bar indicates the traditionally-cooledeggs.
**Figure 16** shows the average carbon dioxide levels in (A) the jar, (B) the air cell, and (C) the albumen.
**Figure 17** shows the average Haugh units and albumen CO₂ levels in (A) control eggs, (B) air cooled eggs, and (C) CO₂ cooled eggs.
**Figure 18** demonstrates the effect of temperature abuse on *S. enteritidis* population on day 26 post-inoculation as affected by pre-inoculation storage.

### Detailed Description of the Invention

Various methods of pasteurizing liquid egg products and shell eggs by heating the egg product are known. *See e.g.,* US Patent No. 5,096,728 to Rapp; US Patent No. 5,455,054 to Bryson et al.; US Patent No. 5,670,198 to Reznik et al.; US Patent No. 5,612,076 to Samimi et al.; US Patent No. 5,415,882 to Knipper et al.; US Patent No. 5,266,338 to Cascione et al., US Patent No. 5,431,939 to Cox et al., and US Patent No. 4,808,425 to Swartzel et al. The methods of the present invention can be used in conjunction with thermal pasteurization methods, *e*.*g*., to achieve greater reductions in microbial contamination and/or to improve egg quality.

Anderson et al. (US Patent No. 5,474,794) report a method for rapid cooling of raw shell eggs using cryogenic gases in order to inhibit the growth of microorganisms within the egg, compared to that which would occur without rapid cooling.

The present inventors have determined that the use of CO₂ cryogenic gas for rapid cooling of poultry eggs post-processing has beneficial effects that are not seen with the use of traditional cooling methods or the use of nitrogen cryogenic gas for rapid cooling. Additionally, the present inventors have determined that the present methods are useful in treating checked eggs and in treating eggs of lower quality (*i.e.*, less than grade AA or less than grade A), and in particular from aged hens (eggs graded A may be improved to grade AA; eggs graded B may be improved to A or AA). The combined effects of CO₂ cooling on microbial contamination and egg quality result in increased shelf life of raw shell eggs that are treated using the present methods, compared to the shelf life that is obtained using traditional cooling methods or cryogenic cooling with nitrogen gas. Current market shelf life (i.e., not including the days required to process the eggs and deliver to the retail sales outlet) is generally accepted as four weeks; some states such as North Carolina recognize four weeks as the recommended refrigerated shelf life for raw shell eggs. An increase in shelf-life is particularly noteworthy when applied to checked eggs, which would otherwise be expected to have decreased shelf life (typically, as a liquid egg product). The present methods can increase refrigerated market shelf life for both intact and checked raw shell eggs (although the maximum shelf life may differ for intact and checked eggs), up to at least about five weeks, six weeks, seven weeks, eight weeks, nine weeks, ten weeks, eleven weeks, twelve weeks, fourteen weeks, sixteen weeks, eighteen weeks, twenty weeks, twenty-four weeks, or more. Preferably, the treated eggs have a refrigerated market shelf life of between about four to about eight weeks; more preferably the treated eggs have a refrigerated market shelf life of between about eight to about twelve weeks; still more preferably the treated eggs have a refrigerated shelf life of more than twelve weeks. As used herein, "market shelf life" refers to the time that a processed raw egg can be held at refrigerated temperatures, and still be suitable for sale to the consumer in terms of both safety and egg quality.

Additionally, the present inventors have determined that the quality (grade) of lesser grade eggs (*e.g.*, less than AA grade) can actually be improved using the present CO₂ rapid cooling methods, and maintain this higher grade over several weeks of refrigerated storage (at least four weeks, and more preferably at least five weeks. six weeks, seven weeks, eight weeks. ten weeks. twelve weeks, fourteen weeks, sixteen weeks. twenty weeks, twenty-four weeks. or more). In particular, the grade of eggs obtained from older hens (at least 50 weeks old) can be improved using the present CO₂ rapid cooling methods. This effect is not seen, or is seen to a lesser degree, in eggs from younger flocks (less than 50 weeks old). Methods of improving the grade of older-layer eggs are beneficial to the egg producer, who would thus require fewer flocks per year to produce eggs that would reach the market at high quality.

As used herein, "poultry" includes chickens, turkeys, ducks, geese and quail.

As used herein, intact eggs are those in which the eggshell is not cracked. As used herein, a "checked egg" is one in which the eggshell is cracked, but the egg membrane remains intact. Checked eggs are more susceptible to microbial contamination during processing. A certain percentage of checked eggs in raw shell eggs marketed to consumers is allowed under current US regulations. (Eggs that are cracked where the egg membrane is also perforated are considered "loss" eggs and are not considered useful for human consumption).

Microorganisms, including those which are health hazards such as *Salmonella enteritidis,* can penetrate the porous shell of the egg and multiply within the egg under certain holding conditions. The pathogens of *Salmonella* species can, if ingested in sufficient numbers, cause illness of widely varying severity. Heat resistance of salmonellae vary widely among strains. Heat-resistant strains are known that are twice as resistant as a typical strain of *S. typhimurium;* one strain, (the 775 strain of *Salmonella senftenberg*) is twenty to thirty times as resistant. Ng et al., *Appl. Microbiol.* 17:78 (1969)).

Desirable pasteurization procedures applied to raw shell eggs should cause little or insignificant change in nutritive value and/or functional quality of the egg contents. It is known that the functional properties of shell eggs can be adversely affected by either excessive heating, or by freezing of the egg contents in the shell. When heat is used to pasteurize egg products, a fairly small margin exists between a pasteurization treatment that kills a significant number of salmonellae, and a treatment that adversely affects the functional properties of eggs. This situation is to be contrasted with milk pasteurization, as milk withstands higher temperatures than egg without adverse effects to milk functional properties. The Egg Pasteurization Manual published by the United States Department of Agriculture, Agricultural Research Service, provides a discussion of pasteurization treatments for various egg products. Accordingly, an advantage of the present inventive methods is that microbial kill in shell eggs can be achieved without exposing eggs to the potentially-deleterious effects of methods that employ thermal treatment of the shell eggs.

Pasteurization of eggs, including raw shell eggs, is primarily concerned with the destruction of salmonellae. The growth of microorganisms in shell eggs is a function of both the number of microorganisms present and the conditions under which the eggs are held. Salmonellae grow in both the whites and yolks of eggs, but appear to grow more readily in yolks. In general, salmonellae grow at temperatures of from about 50°F to about 115°F, although very slow growth may occur between about 45°F and about 50°F if all other conditions are favorable. The condition of the microorganisms present in the egg also contribute to growth, i.e., whether the organism is in a fast-growing stage or a dormant or semi-dormant stage.

It is known in the art for heat pasteurization treatments of liquid egg products that, within limits, equivalent microorganism killing efficiencies can be obtained using various combinations of time and temperatures (e.g., treatment for a longer time at a lower temperature may provide an equivalent effect to a treatment for a shorter time at a higher temperature). See the Egg Pasteurization Manual, USDA. Similarly, while the present methods recite preferred times and temperatures for cooling eggs, it will be apparent to those skilled in the art that slight variations in these parameters can still provide the equivalent results.

The quality of poultry eggs varies with the age of the laying hen, with higher quality eggs being produced by younger hens. Commercial egg producers recognize that a flock of hens will have a "peak" period of production, during which the eggs produced are the highest quality produced over the lifetime of the flock. After the "peak" period, the eggs decline in quality; this time period is referred to as the "post-peak" period. In general, during the post-peak period, both the number of eggs produced by the flock (or by an individual hen), and the quality of the eggs produced, will decline. The post-peak period may be defined as beginning when the number of eggs produced is about 95 % or less than the number produced at the peak period. This can be measured for the flock as a whole or for an individual bird.

The "peak" period differs among different breeds of birds and different strains of the same breed. Additionally, the peak periods will depend on whether the egg producer uses 'single cycle flocks' (hens kept in production for a single period, for example, from about 17 weeks of age to about 80 weeks of age), or 'double cycle flocks' (hens kept in production for one period of time, force molted and rested, and returned to production for a second period).

In single-cycle flocks, the highest quality eggs are produced before "post-peak" period. As noted above, the peak period varies among breeds and strains, but can be before about 48, 49, or 50 weeks of age. In double-cycle flocks, the post-peak period generally occurs after forced molting and resting. For example, birds may be force-molted at about 66 weeks of age, and returned to production at about 70 weeks of age; post -peak production may start at about 80 weeks of age to about 86 weeks of age or older.

Most commercial egg producers segregate flocks by age, so that hens are removed from egg production at a certain age. The age-of-layer effect on egg quality and the occurrence of 'peak' production periods is known in the art.

One accepted measure of shell egg albumen quality is the Haugh unit, an egg quality standard that is a calculation based on albumen height in mm and albumen weight in grams. Haugh unit measurements are typically conducted utilizing the procedure outlined by Haugh, *U. S. Egg Poultry Magazine,* 43:552-555, 572-573 (1937). A Haugh unit score of 65 or higher corresponds to USDA grade AA.

Williams (*World's Poultry Science Journal*, 48:5-16 (1992)) reported that high temperatures and delays in cooling of shell eggs led to lower Haugh unit values, compared to adequately cooled eggs. Curtis et al. (*Journal of Food Protection*, 58:389-394 (1995)) compared eggs cooled with gaseous carbon dioxide (GC) compared to traditionally cooled eggs; Haugh unit scores were higher for those eggs treated with GC compared to traditionally cooled eggs.

It is known that Haugh unit values decrease in eggs as the age of the laying hen increases (Curtis et al., *Poultry Science,* 64:302-306 (1985)). It has also been reported that Haugh unit values decrease over storage time (Kahraman-Dogan et al., *Journal of Food Quality*. 17:495-501 (1994).

The USDA has a scheme of grades for designating egg quality based on the air cell depth. A depth of 1/8 inch (3.2 mm) or less is grade AA. A depth of 1/8 to 3/16 inch (3.2 to 4.8 mm) is grade A. A depth of 3/16 inch (4.8 mm) or greater is grade B. Grading of eggs is typically carried out at the same time the eggs are candled, and are inspected after processing by USDA inspectors. Grading is done according to the USDA Egg-Grading Manual (United States Department of Agriculture, Agricultural Marketing Division, Agriculture Handbook Number 75 (1990)).

It would be desirable to develop procedures that would improve the internal quality and grade of lesser grade eggs, *e.g.*, eggs laid by older layers. It would further be desirable to develop methods of extending the shelf life of eggs (i.e., extending the time the eggs could be held at refrigerated storage temperatures without unacceptable microbial growth and/or loss of quality), including intact eggs, checked eggs, and eggs laid by aged hens.

The present inventors documented that eggs cooled by gaseous cryogenic carbon dioxide (CO₂) had a lower microbial load over a ten week period when compared to Traditionally Cooled (TC) eggs. There were no differences in bacterial counts from sweated and non-sweated eggs. Checked eggs had higher bacterial counts than intact eggs, however, the use of CO₂ cooling reduced bacterial counts. This reduction in bacterial count is greater than that which can be achieved using N₂ cryogenic gas treatment or TC.

These data indicate that the present method of rapidly cooling eggs using carbon dioxide cryogenic gases significantly reduces the bacterial growth seen in shell eggs post-processing and during an extended storage period. Bacterial counts can be maintained at lower levels for extended periods, thus increasing shelf life of whole shell eggs.

Use of the cryogenic CO₂ treatments as described herein decreases the microbial contamination of eggs compared to the microbial contamination that existed immediately prior to processing, or immediately prior to cooling using cryogenic CO₂.

While not wishing to be held to any particular theory of the invention, the present inventors believe that the use of CO₂ cryogenic gas has beneficial effects in addition to those obtained simply by cooling the egg, such as by using cryogenic nitrogen gas. It is known that poultry eggs naturally contain CO₂. Use of other cryogenic gases (N₂) may flush naturally occurring CO₂ out of the egg, with possible deleterious effects.

Raw shell eggs subjected to the present methods have, immediately following cooling using cryogenic CO₂ gas, fewer viable residual pathogenic and/or spoilage microorganisms, compared to the number of such organisms immediately prior to cooling, or prior to washing during commercial processing. The methods of the present invention result in at least about a one-log reduction in microorganisms, and may result in a two-log reduction in microorganisms, a three-log reduction in microorganisms, a four-log reduction in microorganisms, a five-log reduction in microorganisms, a six-log reduction in microorganisms, a seven-log reduction in microorganisms, an eight-log reduction in microorganisms, or even a nine-log reduction in such microorganisms. This effect is seen even in eggs having cracked shells but intact egg membranes ("checked" eggs), and in eggs from older laying flocks that are of lower than Grade AA quality.

As used herein, pasteurization of shell eggs refers to a treatment that results in the destruction of at least about 90% of microorganisms that are present in the egg contents (white and yolk) immediately prior to pasteurization. In other words, microbial content of eggs after pasteurization is no more than about 10% of the microbial content present immediately prior to pasteurization. This is also referred to as a one-log reduction in microorganisms. The ability of a treatment to result in a one-log reduction in shell eggs may be proven using artificially-inoculated eggs, as naturally occurring microbial contamination may be at too low a level to show a one-log reduction.

The present methods do not adversely affect the quality of the treated raw shell egg as measured by Haugh unit values and/or visual inspection, or do so only to an insignificant extent. Thus, the dual effects of microbial kill and functionality of the treated eggs combine to provide eggs having increased refrigerated shelf life. Such increased shelf life can be imparted, using the present methods, to checked eggs (typically in liquid egg products), as well as to eggs obtained from aged hens that are of lower than Grade AA quality. As used herein, "quality" of the shell egg refers to the albumen quality of the contents (for example, as measured by Haugh unit value); it does not refer merely to the presence or absence of cracks in the egg shell. As used herein "refrigerated" refers to temperatures of about 41 °F to about 45 °F and "refrigerated shelf life" refers to storage of eggs at about 41°F to about 45°F for essentially the entire storage period. (It is expected that eggs will spend brief periods of time outside of refrigerated storage, e.g., during movement of the eggs from a truck to a market display unit.). A "warm" egg is one in which the exterior surface and/or the contents of the egg are at a temperature greater than a refrigerated temperature.

Additionally, it has unexpectedly been found that the present methods of cooling raw shell eggs using CO₂ cryogenic gas actually improves the grade quality of eggs that are less than AA grade, in particular, lesser grade eggs from older laying flocks. Eggs that were initially Grade A (prior to processing or CO₂ treatment) were Grade AA after CO₂ treatment. In addition, egg quality is maintained for a longer period of time in CO₂ cryogenically cooled eggs. Accordingly, the present methods provide a process for enhancing the quality of eggs obtained from laying flocks of at least 50 weeks of age.

In the present methods, the raw shell eggs subjected to cooling by CO₂ cryogenic gas do not need to be pre-cooled. Typically, the eggs subjected to the CO₂ cooling methods of the present invention may have an internal temperature (prior to exposure to CO₂) of at least about 55° F (about 12.8° C), more preferably at least about 65° F (about 18.3° C), and most preferably at least about 70° F (about 21.1° C) or about 72° F (about 22.2° C), or higher, to about 82° F (about 33.3° C). Alternatively, where eggs are subjected to in-line processing, the internal temperature may be as high as about 98° F. The present methods comprise placing the warm shell egg in an atmosphere of cryogenic CO₂ gas, at a gas temperature sufficiently low and for a time sufficiently long to result in the desired effects, as discussed further herein. The cryogenic CO₂ gas decreases the internal egg temperature rapidly, decreasing the internal egg temperature. and killing a percentage of the pathogenic and spoilage organisms therein.

In a preferred embodiment, eggs subjected to the present methods are exposed to cryogenic CO₂ gas for a time sufficient such that the internal egg temperature decreases to a temperature of less than about 55° F, preferably of less than about 52° F (about 11° C), or less than about 50° F, and more preferably to about 45° F (about 7° C). The cooling in the cryogenic gas atmosphere is then stopped, typically by the shell egg being removed from the atmosphere of the CO₂ cryogenic gas. The egg contents, however, continue to cool to about 45° F or less. (about 7° C or lower). The decrease to the final desired internal egg temperature of about 45° F (about 7° C) or lower may take up to 50 minutes to achieve after the eggs exit the tunnel where exposure to CO₂ gas is carried out. (As used herein, "exposure" of the shell egg to CO₂ refers to the exposure of the exterior of the shell egg to carbon dioxide at levels greater than that naturally found in the atmosphere. The shell eggs may contain CO₂ within the shell prior to exposure to CO₂ by the present inventive methods, and may continue to contain CO₂ within the interior space defined by the egg shell after exposure to CO₂ according to the present methods has ceased.) In the present methods, the internal egg temperature does not reach temperatures at which the internal components of the egg would freeze (e.g., at about 30°F, 31°F, or 32°F interior egg temperature). Neither the white nor the yolk of the egg is frozen in the present methods, however, a thin ice layer (less than about 3 mm, preferably no more than 1 mm) may form on the inside surface of the egg shell ("latent zone crusting").

The rate of cooling by exposure to cryogenic CO₂ gas is dependent on several factors, including the initial temperature of the egg, the time of exposure to cryogenic CO₂, the temperature of CO₂, and the level of CO₂ in the atmosphere. Carbon dioxide at -109.3° F (-78.5° C) forms a product that is known under the trademark DRY ICE™; US Patent No. 5,765,394 (Rhoades et al.) discloses a method and system for cooling matter using a low of liquid carbon dioxide subjected to a pressure expansion to create a flow of carbon dioxide snow and vapor.

The growth of many pathogenic and spoilage microorganisms is slowed down or temporarily stopped in response to cold temperatures. In general, microorganisms that are psychotrophs will slow down in the cold and microorganisms that are mesophiles will stop replicating in the cold. In particular, salmonellae are slowed down, until at about 45° F (about 7° C), when activity of salmonellae is inhibited to such an extent that replication ceases. The present inventors have determined that the use of CO₂ cryogenic gas to cool raw shell eggs imparts beneficial effects in addition to that achieved simply by cooling the egg. Such beneficial effects include microbial kill and enhanced quality.

As used herein, the term "processing" as it relates to raw shell eggs refers to present commercial egg processing techniques that include a hot water wash (as required by US Federal regulations), as well as the below described variation on commercial processing that employs a cold water wash.

In a further embodiment of the present invention, the cryogenic CO₂ gas cooling treatment is conducted on raw shell eggs prior to the traditional processing procedure of washing. The eggs should, however, be subsequently washed such that the wash (i.e., the combination of water temperature and time exposed to the water) does not raise the internal temperature of the egg such that the microbe-killing effects of the CO₂ treatment are compromised or reduced. Ideally, any post- CO₂ wash would not raise the internal temperature of the egg above about 45° F (about 7° C). Further, the water should not be more than about 50° F higher (and preferably should not be more than about 40° F higher) than the internal temperature of the egg, to avoid cracking or checking of the egg shell.

The eggs are typically exposed to the cryogenic CO₂ gas within a sealed chamber or tunnel. In commercial egg processing operations, it is preferable to use a cooling tunnel.

Dwell time for the warm raw shell eggs in the cooling chamber or tunnel (where exposure to cryogenic CO₂ gas occurs) should be from about five seconds to about 1 hour, and more preferably is from about 1 minute to about 10 minutes, about 1 minute to about 5 minutes, more preferably from about 1.5 minutes to about 4.5 minutes, and most preferably from about 2 minutes to about 4 minutes. The time, however, will vary depending on the length of the cooling tunnel, the speed of egg movement. the percentage of CO₂ and temperature of CO₂. the particular low temperature that is employed, the status of the egg (e.g., checked or intact. from older layers or from a younger flock), and the effects that are desired on the egg. Preferably, the time and temperatures are chosen so that the egg contents do not freeze. Either cryogenic CO₂ gas or a "snow" of frozen CO₂ may be employed.

In general, exposure to CO₂ is sufficient to provide the present beneficial effects without cracking the egg or adversely affecting the functional properties or appearance of the eggs, *e.g.*, the albumen quality of the shell eggs. Cryogenically cooled eggs according to the present invention can be used for essentially any purpose that traditionally cooled eggs are used. The flavor, texture, and appearance of eggs cooled according to the present invention are the same as, or improved, as compared with eggs cooled using traditional methods.

Suitable low temperatures for the present CO₂ treatment range from about -60° F (about -51° C) to about -120° F (about -84° C), more preferably from about -70° F (about -57° C) to about -110° F (about -95° C), and most preferably from about -80° F (about -62° C) to about -100° F (about -73° C). The dwell time in the cryogenic CO₂ gas atmosphere to achieve an internal egg temperature of at least about 45° F or lower, considering both time exposed to CO₂ gas and the time after exposure during which the internal temperature of the egg continues to fall, is referred to herein as the "equilibrated dwell time to 45° F".

The present inventors further studied the effects of cryogenic cooling on shell egg quality. Gaseous carbon dioxide (CO₂) was used to rapidly cool eggs in a commercial egg processing facility and compared to traditional cooling. Preferably, the concentration of CO₂ in the cryogenic gas is at least about 50%, 75%, 85%, 90%, 95%, 98%, 99% (v/v) or higher. More preferably, the concentration of CO₂ in the cryogenic gas is essentially 100% (v/v).

Traditionally cooled (TC) eggs refers to those which were washed and packaged in cases directly from the processing line. The CO₂-treated eggs were passed through a cooling tunnel where they were exposed to cryogenic gaseous carbon dioxide. Two periods of testing were conducted with two replicates of each treatment being processed each period.

The eggs were stored and tested over a twelve-week period. Measurements were made four days a week. Fifteen eggs from each replicate were randomly selected and sampled for Haugh unit measurement. These Haugh unit tests were conducted utilizing the Technical Services and Supplied QCD Instrument Range. It was found that in cases where lower quality eggs (eggs from an older flock) were cryogenically cooled with carbon dioxide (CO₂), interior egg quality was increased compared to beginning egg quality, and this increase in quality was maintained for some weeks following CO₂ treatment. When better quality eggs were exposed to cryogenic cooling, there was no initial increase in quality, but quality was maintained over a ten-week period.

Egg grading was conducted four days a week for the duration of the study. The eggs were examined by professional egg graders. A random sample of fifty eggs from each replicate were candled daily. The percentage of loss eggs increased over storage time. The percentage of checked eggs was significantly (P < 0.05) greater in the CO₂ treatment as compared to TC eggs (6.81 % and 5.52%, respectively). However, the percentage of checked eggs was within tolerance levels (based on US standards).

The present inventors determined that cryogenic CO₂ treatment of eggs increases the Haugh unit value of eggs of lesser grades (eggs that are initially less than Grade AA), and did not adversely affect the high Haugh unit values of AA grade eggs. In addition, the present inventors determined that CO₂ cooling increased overall Haugh unit values of eggs of poorer quality eggs (e.g., eggs of less than grade AA). Eggs initially of AA grade prior to cooling maintained AA quality at least one week longer than their traditionally cooled counterparts. Eggs which were of poorer quality initially (A grade, or eggs from flocks past peak production age) increased in quality after CO₂ treatment.

The present invention provides a method of increasing the grade quality of eggs graded A or less prior to cooling (USDA Grading standards), or stated another way, a method of increasing the grade of eggs laid by older flocks. This method allows egg producers to let flocks lay for a longer period of time while still providing eggs of Grade AA, thus decreasing the number of flocks required each year by that producer to provide Grade AA eggs.

The use of carbon dioxide gas to cool shell eggs did result in an increase in the percentage of checked eggs. compared to traditional cooling. This increase, however, was low and was below the allowable level of the USDA.

It has been shown that as an egg ages the vitelline membrane weakens. Osmotic movement of water across the membrane from albumen to yolk causes an enlargement and flattening of the yolk and stretches the membrane (Romanoff and Romanoff, The Avian Egg, John Wiley and Sons, New York, NY, 1949). Certain areas of the membrane can become more permeable, allowing the yolk and albumen contents to mix. Nagoka et al. (*Poultry Science,* 62:718-720 (1982)) found significant differences in membrane breaking strength related to bird age. The rate of deterioration of internal quality characteristics is dependent on storage temperature. Stadelman and Rhorer (*Egg Industry*, 93:8-10 (1987)) found that eggs produced by in-line production facilities and packed warm in cartons may require days to reach an internal temperature of about 10°C. The present inventors investigated the effect of rapid CO₂ cooling of processed shell eggs on the strength of the yolk membrane of eggs during an extended storage period.

The present inventors determined that cryogenic cooling using CO₂ increased the elasticity and breaking force of yolk membranes. This increase in membrane strength provides additional protection against yolk rupture during egg handling and break out, which is desirable to the consumer. The stronger membrane may also help prevent leakage of the yolk into the albumen which results in mixed rots and loss eggs, and provides nutrients for *Salmonella enteritidis* growth in internally contaminated eggs.

The present invention also provides a method of storing eggs in CO₂ gas, *e.g.*, to reduce microbial populations within the shell egg, to extend the refrigerated shelf life, and/or to improve and maintain egg quality, all as described hereinabove. Typically, and more preferably, the eggs will be stored under refrigerated conditions in the gaseous CO₂. For example, a single egg or a plurality of eggs may be placed into a sealed container into which CO₂ gas is introduced. The concentration of CO₂ in the gas is greater than that found in ambient air, and is preferably at least about 50%, 75%, 85%, 90%, 95%, 98%, 99% (v/v), or higher. More preferably, the concentration of CO₂ in the gas is essentially 100% (v/v).

Storage off shell eggs in gaseous CO₂ according to the present invention results in little or insignificant change in nutritive value and/or functional quality of the egg contents.

The cryogenically CO₂ cooled eggs are preferably and advantageously stored in a gaseous atmosphere containing CO₂ following the inventive cryogenic CO₂ cooling methods described herein. Storage of cryogenically CO₂ cooled eggs in a CO₂ atmosphere may enhance and/or extend the beneficial effects of cooling in cryogenic CO₂ gas. The combination of cooling and storing in CO₂ may be carried out according to the present invention to achieve greater reductions in pathogenic microorganisms in shell eggs (as described hereinabove) and/or to delay the increase in pathogenic microorganisms in stored shell eggs (*e.g,* to extend shelf life). As a further example, storage of cryogenically CO₂ eggs in a CO₂ gas atmosphere can further enhance the improvement in egg quality achieved by practice of the present invention and maintain this improvement over a longer time period.

In particular embodiments, shell eggs that have been and/or are stored in a CO₂ atmosphere can be shipped by rail, truck or boat (*e.g.*, for export) for extended distances or periods of times. Shell eggs that have been cooled and stored in air will generally be precluded from long-term storage or long-distance shipping because they have an insufficiently-long shelf life (as determined by microbial contamination and/or quality). In contrast, eggs shipped in a CO₂ atmosphere (preferably following cryogenic CO₂ cooling) are suitable for such uses because they exhibit an extended refrigerated shelf life, lower levels of microbial contamination, and maintain their quality for a longer period of time as compared with eggs shipped in air.

In preferred embodiments, the shell eggs are stored in a CO₂ atmosphere for most (more preferably, essentially all) of the period of time between the time point at which the eggs are have been chilled and the time at which the eggs are sold to commercial and/or retail consumers. Alternatively, the eggs may be stored in a CO₂ atmosphere during a storage period prior to shipping to commercial or retail purchasers. As a further alternative. the eggs are stored in a CO₂ atmosphere during the shipping period.

In yet a further alternative embodiment, the shell eggs may be exposed to a gaseous CO₂ atmosphere prior to cooling the eggs, preferably cooling with cryogenic CO₂ gas (*e*.*g*., a holding period).

Shell eggs may be stored in a CO₂ atmosphere according to the present invention by any means known in the art, *e.g.,* in a sealed container or chamber. Alternatively, any space in which the eggs are being stored, shipped or sold can be "flushed" with CO₂ gas. The eggs may optionally be sold to commercial and/or retail customers in modified packaging that retains CO₂ gas. As a further alternative, the eggs can be exposed to CO₂ gas during the chilling and/or storage period and the gas maintained within the interior of the egg through a film that is wrapped around individual shell egg(s) or a package containing the shell eggs. More preferably, each egg is wrapped in an edible film that maintains an elevated level of CO₂ in the interior of the egg.

In the cooling and storing methods described hereinabove, the level of CO₂ in the interior of the egg may be enhanced by any method known in the art, *e*.*g*., by applying a pressure to the shell egg or by increasing the vacuum into the egg (for example, by manipulating the temperature gradient between the chilled egg and the ambient temperature).

The Examples which follow are set forth to illustrate the present invention, and are not to be construed as limiting thereof.

### EXAMPLE 1

### Dwell Time to Achieve Internal Egg Temperature

The dwell time of warm raw shell eggs subjected to rapid cooling in a cryogenic gas atmosphere (carbon dioxide or nitrogen) to achieve internal egg temperature of about 45° F (about 7° C) was studied. Also, the equilibrated dwell time to an internal egg temperature of about 45° F (about 7° C) was studied.

By the phrase "equilibrated dwell time" is meant the duration of exposure to the cryogenic gas atmosphere that is required so that the internal egg temperature is cool enough that the internal temperature of the egg continues to fall after removal from the cryogenic gas atmosphere, to a predetermined internal egg temperature. To reach an internal temperature of about 45° F (about 7° C), it was found that the internal egg temperature at the equilibrated dwell time was about 52° F (about 11.1 ° C). Eggs removed from the cryogenic gas atmosphere at that point reached an internal egg temperature of about 45° (about 7° C) in about 35 to 45 minutes.

The following conditions were used in the present study. To simulate the heat imparted to raw shell eggs during the conventional washing, rinsing, and candling in an egg processing plant, raw shell eggs were warmed in a 100° F (38° C) hot water bath for 60 minutes so that they would be at an internal temperature of about 90° to 95° F (about 32.2° to 35° C), which approximates the temperature of raw shell eggs in a processing plant after washing and candling.

After the warming, a set of 30 eggs was placed on a frame on a conveyor belt and passed through a cooling tunnel containing cryogenic gas (CO₂ or N₂). During the runs, three temperature probes were arranged, respectively, in each of three shell eggs, one probe in a middle shell egg, one probe in a side shell egg on one side of the frame, and one probe in a side shell egg on the opposite side of the frame.

For Tests 1 and 2, multi-pass runs of 1-minute dwell time each were carried out for a total of five passes. After each 1-minute pass, four shell eggs were taken from the frame and the internal temperatures thereof noted and recorded. As indicated in Table I below, actual dwell time to reach a final desired internal temperature of about 45° F (about 7° C) was compared with the equilibrated dwell time to reach an internal temperature of about 52° F (about 1.1° C) for Tests 1 and 2. Of course, the "equilibrated dwell time to 45° F" was less than the dwell time to 45° F, as can be seen in the Table below.

For Tests 3 and 4, five separate runs of dwell times of 1 minute, 2 minutes, 3 minutes, 4 minutes, and 5 minutes, respectively, were carried out, each using a set of 30 shell eggs for a total of five sets of shell eggs. As noted above, three temperature probes were employed during the runs, except that four temperature probes (two for each of two side eggs, one for a middle egg, and also one for the ambient conditions) were employed in the 5-minute dwell time test. After each run. four shell eggs were removed and the internal temperatures thereof checked and recorded.

In Test 1, a carbon dioxide tunnel was employed for the cooling chamber. The operation was automatic and had all headers (CO₂ valves and nozzles). The temperature of the cryogenic gas inside the tunnel and outside the shell eggs was about -60° F (about -51° C).

For Test 2, the conditions and the cryogenic gas for the tunnel were the same as in Test 1, except that the operation was manual instead of automatic.

For Test 3, the conditions and the cryogenic gas for the tunnel were the same as in Test 1, except that only the last header was on instead of all the headers, thereby simulating a counter current configuration.

For Test 4, the conditions were the same for the tunnel as in Test 3, except that liquid nitrogen was used as the cryogenic gas instead of carbon dioxide.

Heat transfer curves were determined, and it was found that approximately 40 BTUs/pound must be removed in order to cool the eggs from the beginning internal temperature of about 95° F (about 35° C) to a desired internal temperature of about 45° F (about 7° C). In connection therewith, the far right column of Table I below indicates, at the temperature where freezing started, i.e. at about 31° F (about -0.5° C), the loss in BTUs as the eggs moved into the latent frozen zone (layer of ice on internal side of egg shell) for an eventual equilibration at an internal temperature of about 45° F (about 7° C).

The results are summarized in **Table I** below:

**Table I**

| Test *#* | Cryogenic Gas | Freezer Operation at -60°F | Equilibrated Dwell to 45°F (minutes) | Internal Dwell to 45°F (minutes) | Estimated Equilibration Temp. for 45°F Internal |
|---|---|---|---|---|---|
| 1 | CO₂ | automatic | 2 - 2.35 | 4 | 31°F - 10 BTUs in Latent Zone |
| 2 | CO₂ | manual | 1.4 | 2.75 | 31°F -40 BTUs in Latent Zone |
| 3 | CO₂ | counter current | 3 - 3.5 | ND* | ND |
| 4 | N₂ | counter current | 2.5 - 3 | ND | ND |
| ND = not determined. | | | | | |

In Test 1 and Test 2, cooling in the cryogenic gas atmosphere took longer to cool eggs to about 45° F (about 7° C) internally than to cool eggs to about 45° F (7° C) equilibrated. The eggs whose internal temperature was 52° F (11.1° C) when cooling by the gas was stopped, were found to have about a 1 mm ice layer on the inside surface of the shell (colloquially called latent zone crusting). which is believed to assist in creating the heat sink whereby internal temperature continues to fall after removal of the egg from the cryogenic gas atmosphere.

Comparing Test 3 with Test 4, both of which had the same operating conditions, it appears that N₂ cooled the eggs faster than did CO₂.

No freeze-related cracks were observed in the shells of eggs tested in this study. All shell eggs subjected to the rapid cooling tests were candled to determine shell quality and no reverse thermal cracks were found in any of the shell eggs. No effect on albumen height, Haugh unit scores, or USDA grades was observed. Also, albumen pH was not different from comparisons (eggs not subjected to the rapid cooling process), and was measured at 8.89 to 8.76 for small shell eggs and 9.05 to 8.4 for large shell eggs.

### EXAMPLE 2

### Air Cooled vs. Cryogenically Cooled Shell Eggs - Methods

The following studies were conducted in a commercial egg processing facility (Monroe, NC, USA). Eggs were processed using a Diamond 8200 washer/grader, at two separate time periods. Eggs utilized in Period 1 for both traditionally cooled (TC) and CO₂ treatments were from older aged hens (past peak production age), and thus represented lower quality eggs. The eggs utilized in Period 2 (TC and CO₂) were from younger flocks (before or at peak production) and represented higher quality eggs. A total of 43,200 eggs were processed, placed in foam cartons, and cooled by either TC or CO₂.

Eggs subjected to traditional cooling (TC) were washed and then packaged directly from the processing line: eggs were placed in cartons, the cartons were closed and packaged in cases, and the cases were stacked in a palette and stored in a walk-in commercial cooler (ambient temperature of about 7 °C).

Eggs subjected to gaseous cryogenic carbon dioxide treatment (CO₂) were washed and placed in cartons, and the open cartons were passed through a prototype cooling tunnel (modified 18 foot JE-U4 tunnel freezer manufactured by Praxair, Inc. of Burr Ridge. IL; modified to use either N₂ or CO₂ as the cryogen) where they were exposed to gaseous carbon dioxide (tunnel temperature was maintained at a constant temperature of -51 °C ± 3 °C); after emerging from the cooling tunnel the cartons were closed and packaged in cases, and the cases were stacked in a palette and stored in a walk-in commercial cooler (ambient temperature of about 7 °C). Two replicates of CO₂ and TC treatments were carried out.

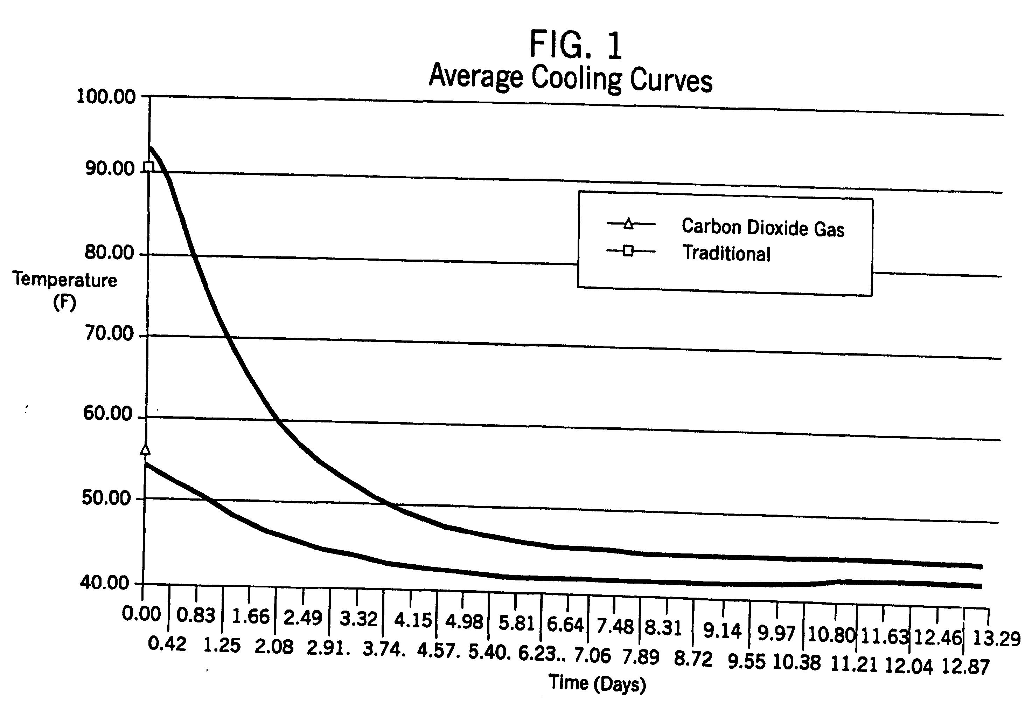

Additionally, to monitor the internal temperature of eggs, a temperature probe connected to a data logger was placed in the centermost egg of a case from each replicate. This case of eggs was placed in a palette simulator (Curtis et al., *Journal of Food Protection*, 58:389-394 (1995)) and cooling curves were constructed from the temperature probe data for both CO₂ and TC treated eggs (**Figure 1**).

Quality Assessment: The CO₂ and TC treated eggs were tested over a twelve week storage period. Testing occurred four days each week. The eggs were tested for interior quality (Haugh unit) and their USDA grade was assessed. Haugh unit measurements were conducted utilizing the procedure outlined by Haugh, *U.S. Egg Poultry Magazine,* 43:552-555, 572-573 (1937). The measurements were performed with the aid of the Technical Services and Supplies QCD Instrument Range. A fifteen egg sample was tested from each replicate four days a week.

Egg grading was conducted by professional egg graders according to US industry standards. A fifty egg sample of each replicate was graded each day. The exception was the first week following the run when a hundred egg sample was graded each day. The graders assessed the percentages of loss and cracked eggs as described in the USDA Egg-Grading Manual (United States Department of Agriculture, Agricultural Marketing Division, Agriculture Handbook Number 75 (1990)).

Data was analyzed using linear regression procedure of SAS® (SAS Institute, *A User's Guide to SAS*®. Sparks Press, Inc.; Cary, North Carolina, 1989). Means were separated by least square means.

Sweating of Eggs: The eggs were divided into two sets, one set was sweated. The sweating process involved allowing both treatment groups to cool to about 45 °F internally after processing (eggs were removed from the egg case to cool quicker) and at about 24 hours post processing, placing cooled eggs in an incubator at 38°F and 90% humidity for 2.25 hours. The eggs were then returned to the commercial walk-in cooler at ≤45 °C and stored until sampled. The eggs were not allowed to dry prior to being returned to the cooler.

Microbiological Assessment: Eggs were sampled and contents plated daily for 4 days each week for ten weeks post-processing. Five eggs were randomly selected from each of the four treatment groups (CO₂: sweated (S) and non-sweated (N); and TC, sweated and non-sweated). The contents were aseptically sampled, and 0.3 ml of stomached contents were pipetted to the surface of Tryptic Soy agar plates for spreading with a flamed glass rod. Plates were incubated for 24 hours at 37°C.

At weeks 8 and 10, a sample of checked eggs (checked after processing) were plated to determine the contamination level of cracked eggs from each treatment combinations.

### EXAMPLE 3

### Microbiological Counts: CO₂ versus TC Treatment

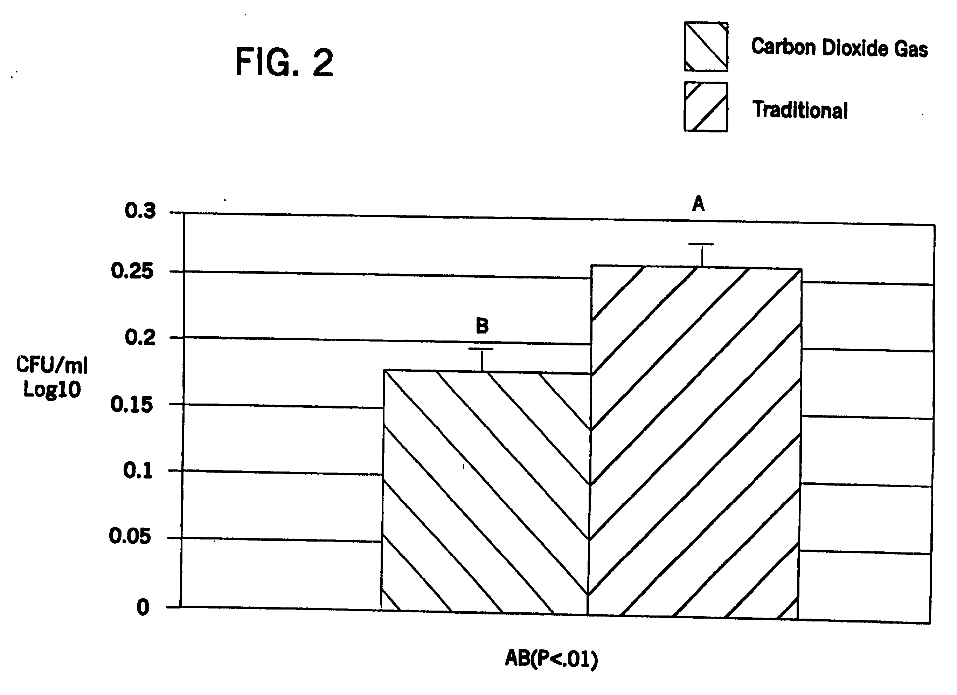

The CO₂ treatment group had lower (P < .01) microbial counts than the TC group over the ten week sampling period (see **Figure 2**; average of all eggs plated).

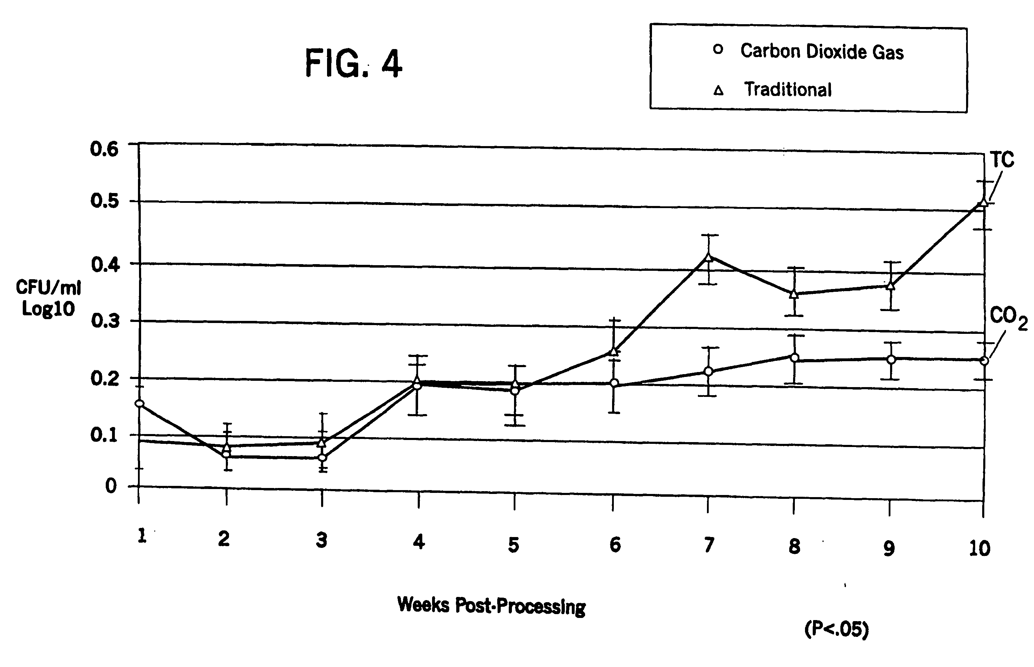

The treatment-by-week interaction (P < .05) was examined (**Figure 4**) and it was observed that the CO₂ cooled eggs had little or no growth from week 4 to week 10 post-processing, while the TC cooled eggs sustained significant growth during the same period. Ten week counts for CO₂ were lower than the TC (10⁻²⁴ and 10⁻⁵², respectively).

### EXAMPLE 4

### Effects of Sweating CO₂ Treated Eggs

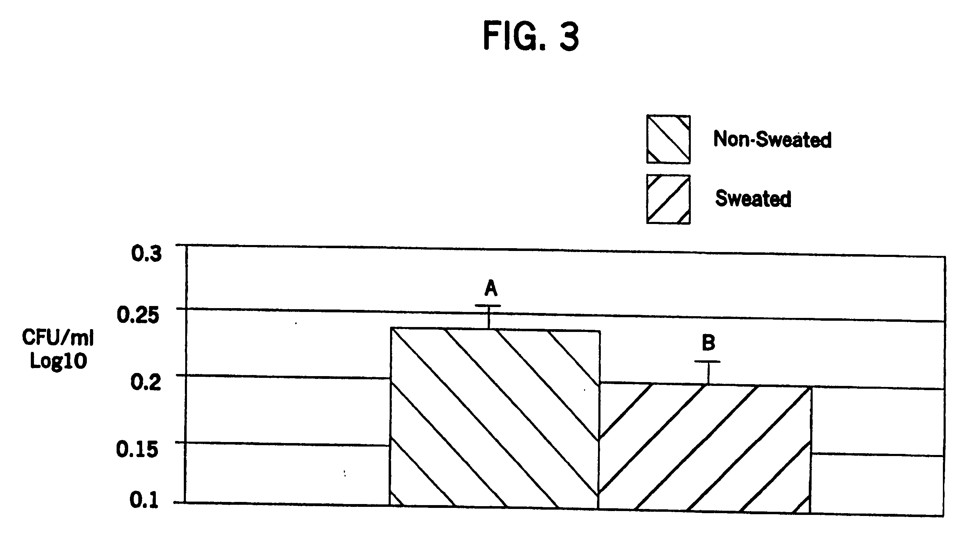

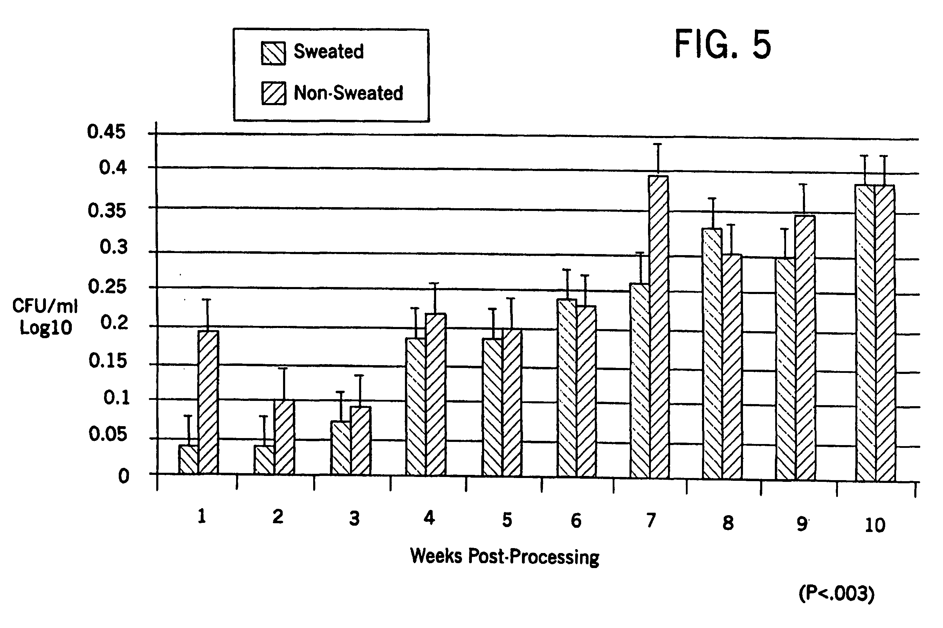

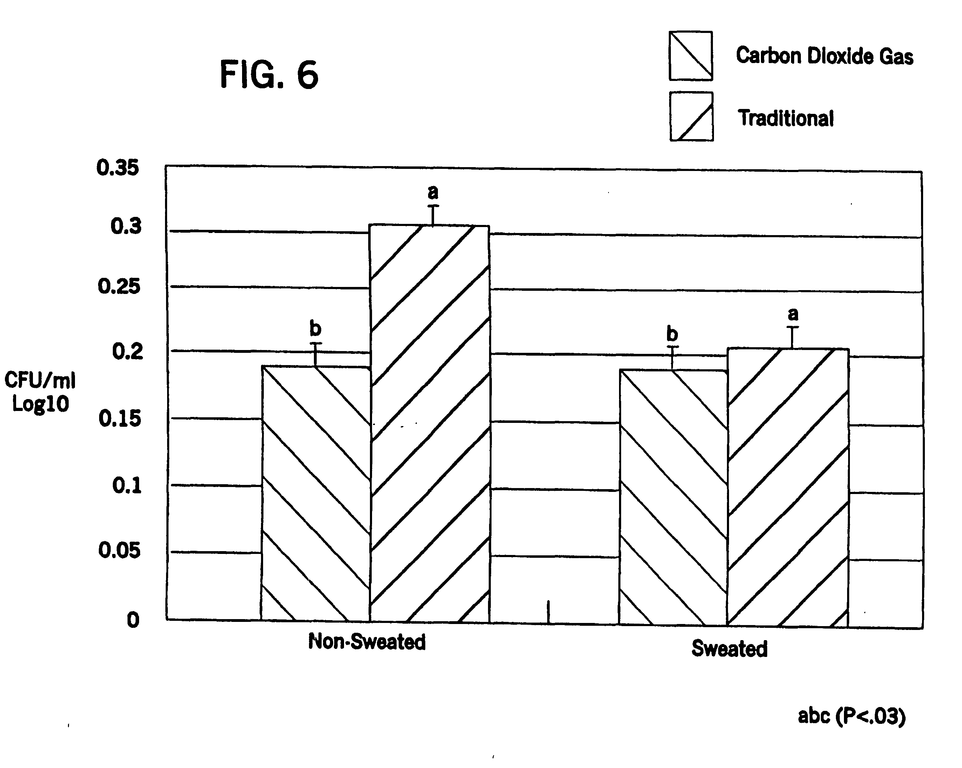

As shown in **Figures 3, 5** and **6**, sweating did not increase the microbial contamination of eggs.

### EXAMPLE 5

### Bacterial Counts in Cracked Eggs

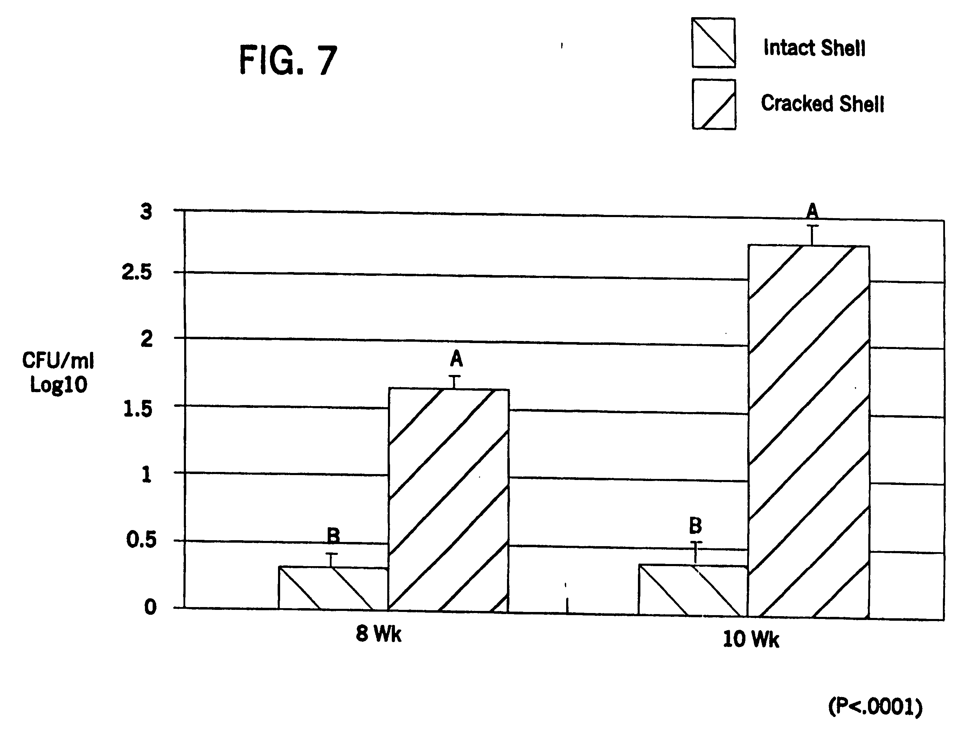

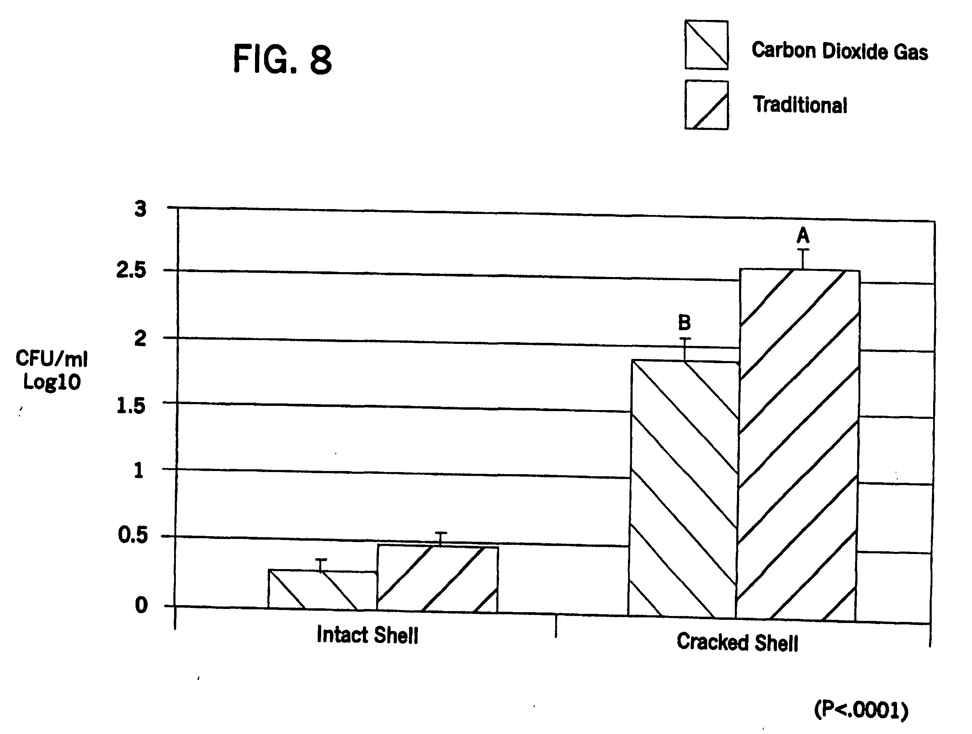

At eight weeks, in both the CO₂ and TC treatment groups, checked eggs had bacterial counts which were about five-fold higher (P<.0001) than those from intact shell eggs (**Figure 7;** non-sweated eggs). However, the bacterial counts obtained at eight weeks from checked eggs that were treated with CO₂ were lower compared to eggs treated with TC (see **Figures 7** and **8**).

### EXAMPLE 6

### Effect on Haugh Unit Value of Eggs

The average egg cooling curves for the two treatments (CO₂ and TC) are illustrated in **Figure 1**. The CO₂ eggs initially dropped to an average temperature of about 55°F within minutes of leaving the cooling tunnel. The TC eggs had an initial average temperature of about 93°F within minutes of packing.

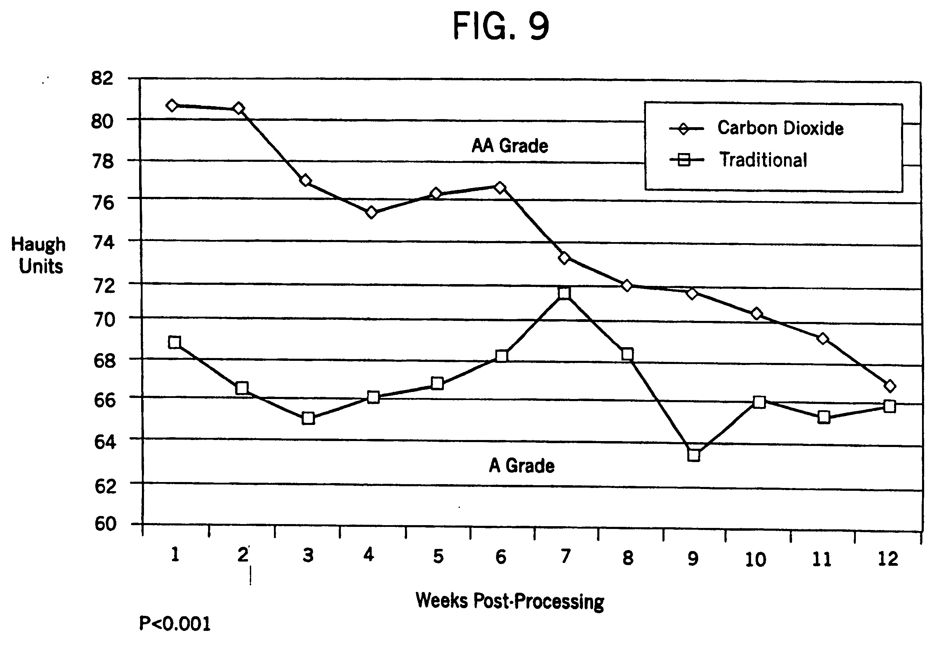

The Haugh unit values were analyzed for both Period 1 and Period 2 eggs. Average Haugh unit values were greater for the CO₂ treatments in both periods (**Table II**). Significant treatment-week interactions were seen for both periods. During the first period, CO₂ eggs fell (from AA grade) into the A grade category only after seven weeks of storage (**Figure 9**). The TC eggs for the same period were in the A grade category for the duration of the study (**Figure 9**).

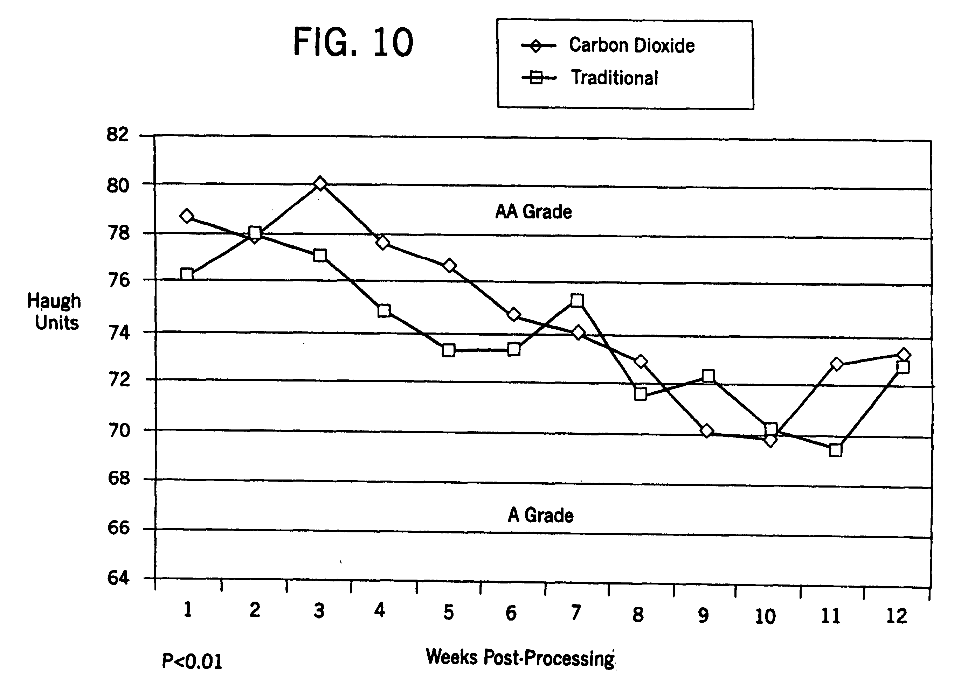

Eggs from Period 2 had Haugh unit values for the CO₂ treatment which remained in the AA grade category one week longer than the TC eggs (**Figure 10**)**.**

Both production periods were combined before the egg grade data was analyzed. The overall percentage of loss eggs was not significantly different between the treatments. as seen in **Table III.** The percentage of cracked eggs was greater (P<0.05) for the CO₂ treatment (**Table III**).

The two treatment periods were analyzed separately for Haugh units because of the different sources of the eggs: older or younger hens. Eggs utilized in the first period were from older hens, which produced eggs of poorer quality. This lower initial quality (lower quality measured both before cooling and after cooling, at the start of storage) can be seen in the Haugh unit values of the TC eggs from this period. The TC eggs from this period had initial Haugh unit values that were already in the A grade range (Haugh unit < 72). The initial values for the CO₂ eggs were 80.70 (average; Grade AA). This trend of higher Haugh unit values for the CO₂ treatment continued throughout the storage time. There was also a greater Haugh unit value seen for the CO₂ treatment during the second period. This difference was not as great as the one seen in the first period. The eggs utilized during the second period were from younger hens which produced eggs of higher initial quality (compared to those used in the first period).

The percentage of cracked eggs was greater (P<0.05) for the CO₂ eggs but this value was not above the seven percent allowable level defined by the United States Department of Agriculture. This increase in the percentage of cracked eggs could be due to cooling tunnel design or nozzle direction in the tunnel. Even though the two treatments were different for the percentage of cracked eggs, this difference was only 1.3%. The fact that the tunnel utilized for cooling was modified for shell eggs could explain some of the difference in the percentage of cracked eggs for the two treatments. There was no difference found among the treatments for the percentage of loss eggs.

**TABLE II**

| **Average Haugh Unit Values** | | |
|---|---|---|
| Treatment | Haugh Unit Values Period I | Haugh Unit Values Period 2 |
| CO₂ | 74.01 | 74.82 |
| TC | 66.71 | 73.64 |

**TABLE III**

| **Percentage of Chex and Loss Eggs** | | |
|---|---|---|
| Treatment | Chex | Loss |
| CO₂ | 6.81^{a} | 2.17 |
| TC | 5.52^{b} | 1.84 |
| | p < 0.05 | |

### EXAMPLE 7

### Methods: Vitelline Membrane Breaking Strength

The present study investigated the effects of CO₂ cooling on the strength of the vitelline membrane (yolk membrane) over an extended storage period. Two replicates of each treatment (CO₂ and TC) were processed during the two separate test periods and held in refrigerated storage for testing. The first period (Period 1) processed eggs from an older flock of birds, which had poorer initial quality eggs. The eggs processed during Period 2 were from a younger flock and had better overall initial quality. After processing and casing, eggs were palletized and all samples held in commercial refrigerated storage for testing, as described in Example 2.

Ten egg samples from each treatment replicate were randomly selected and measured four days a week over an eleven-week period. Compression measurements were made using the TA.XT2 Texture Analyzer (Texture Technologies Corp., Scarsdale, NY) with a 5 Kg capacity and 0.1 gram sensitivity. Pressure was applied at a rate of 3.2 mm/sec, with the instrument set at ten grams full scale. A 1 mm rounded end, stainless steel probe was used to apply direct pressure to the yolk vitelline membrane until membrane rupture occurred. One of the major variables in vitelline membrane strength is selection of the measurement area in relationship to location of the germinal disc. See Fromm (*Poultry Science* 41:1516-1521 (1964)) and Holder et al. (*Poultry Science* 47:326-329 (1968)). In the present experiment, eggs were broken into a shallow dish which allowed orientation of the yolk for penetration along the equatorial region. The broken out egg, including both albumen and yolk, was used to prevent surface drying and limit stress due to the additional handling required for separation.

Relative elasticity of the membrane was determined as the distance the probe traveled from the point of surface contact until membrane rupture occurred. Membrane breaking strength was noted as grams force required for rupture.

Data were statistically analyzed using the linear regression procedure of SAS® (SAS Institute, *A User's Guide to SAS*®, Sparks Press, Inc.; Cary, North Carolina, 1989).

### EXAMPLE 8

### Results: Vitelline Membrane Breaking Strength

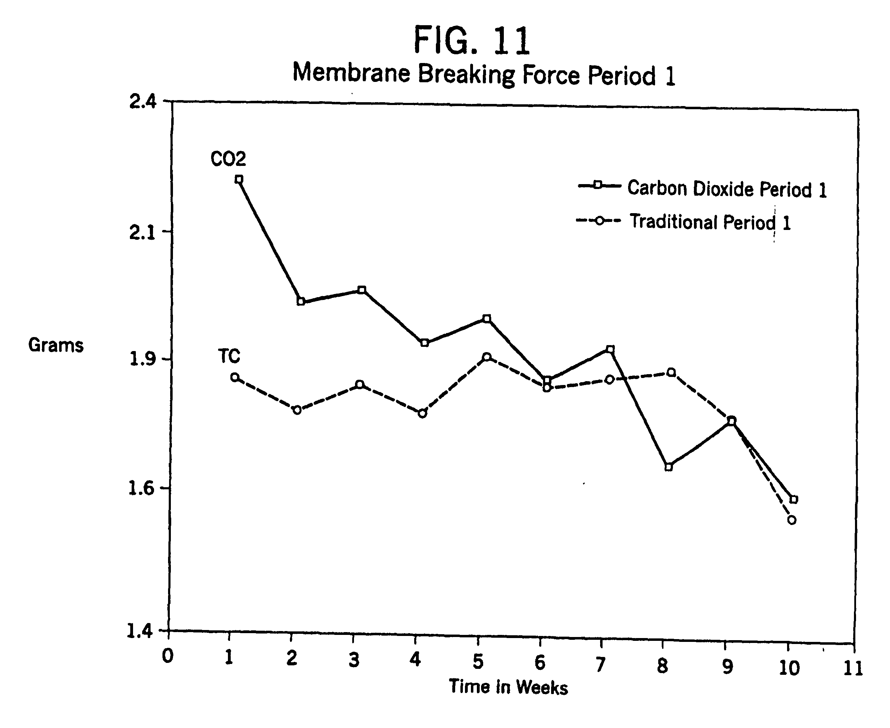

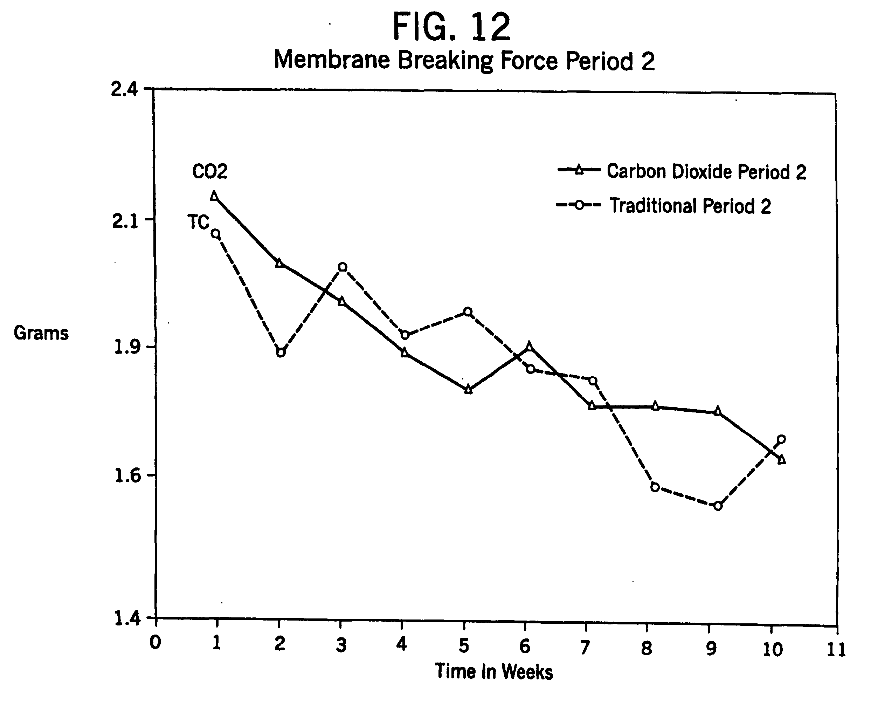

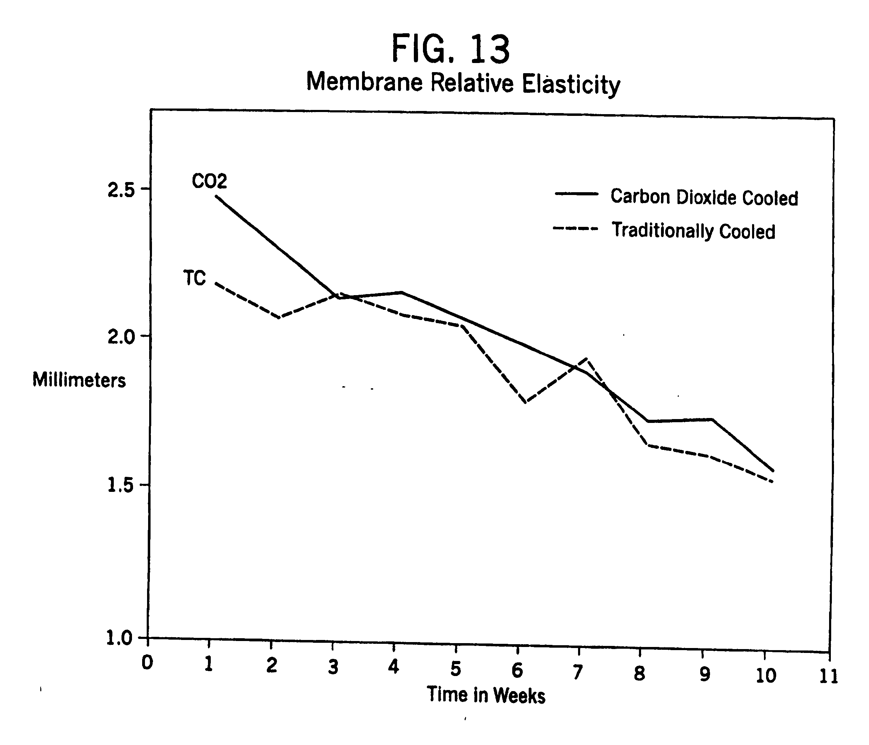

As shown in **Table IV,** the vitelline membrane of eggs cooled with gaseous carbon dioxide (CO₂) required significantly higher breaking forces (p<0.05) than traditionally cooled eggs (with an average of 1.91 gm and 1.85 gm respectively). The cryogenic CO₂ cooling increased the strength of the vitelline membrane notably in the initial weeks of testing and this increase remained significant over the first four to five weeks of storage. Also, this benefit was more prominent for the poorer quality eggs processed during Period 1 (see **Figure 11**) and less pronounced in eggs from period 2 (**Figure 12**). CO₂ treated eggs had significantly higher (p < 0.05) membrane relative elasticity than traditionally cooled eggs (**Figure 13**).

**TABLE IV**

| **Breaking Force and Relative Elasticity of the Vitelline Membrane** | | | | | |
|---|---|---|---|---|---|
| Week | Breaking Force (grams) | | Week | Relative Elasticity (mm) | |
| | CO₂ cooled | TC cooled | | CO₂ Cooled | TC Cooled |
| 1 | 2.23 | 2.00 | 1 | 2.47 | 2.19 |
| 2 | 2.05 | 1.85 | 2 | 2.31 | 2.07 |
| 3 | 2.02 | 1.96 | 3 | 2.13 | 2.14 |
| 4 | 1.92 | 1.87 | 4 | 2.15 | 2.07 |
| 5 | 1.91 | 1.95 | 5 | 2.05 | 2.03 |
| 6 | 1.89 | 1.86 | 6 | 1.97 | 1.77 |
| 7 | 1.87 | 1.86 | 7 | 1.87 | 1.92 |
| 8 | 1.75 | 1.77 | 8 | 1.71 | 1.63 |
| 9 | 1.79 | 1.71 | 9 | 1.72 | 1.59 |
| 10 | 1.68 | 1.67 | 10 | 1.55 | 1.51 |

### EXAMPLE 9

### Inoculated Eggs - Young Layers

A plurality of eggs are obtained from a flock of laying hens at peak production. Eggs are artificially inoculated with a known amount of a salmonellae (such as *Salmonella enteritidis*), or a readily detectable microbe such as *Pseudomonas fluorescens,* or a microorganism that is known to contaminate egg contents of eggs obtained from commercial egg laying and/or processing facilities. Inoculation may be by any suitable method as is known in the art, such as by dipping, immersing or spraying with a solution containing a known concentration of the test microorganisms. The eggs include subsets of non-cracked (intact) eggs, checked and cracked.

A plurality of inoculated eggs and non-inoculated control eggs are processed as described in Example 1 above, with some eggs receiving traditional cooling treatment (TC) and others receiving cryogenic gaseous carbon dioxide (CO₂) treatment. Additional eggs receive cryogenic gaseous N₂ or liquid N₂ treatment. A sample of eggs (inoculated and non-inoculated) are not cooled but are investigated prior to cooling, at different points during processing (e.g., before washing, after washing), to determine microbial load prior to cooling.

Interior contamination of eggs is determined at different time points after TC, N₂ or CO₂ treatment, for each subset of eggs. Interior contamination is assessed according to techniques known in the art, such as by evaluating shell membrane contamination levels. One such method involves dipping an egg in ethyl alcohol to sterilize the egg surface, breaking the egg and discarding the internal shell contents, and swabbing the air cell with a sterile swab having a calcium alginate tip. The swab is then placed in a sample tube with citrate buffer to dissolve the swab tip and release any microbes present. A portion of the citrate buffer is then plated on one or more plates containing an appropriate growth medium. Plates are incubated for a preset time and temperature, and counts of colonies is determined on a per egg basis.

### EXAMPLE 10

### Inoculated Eggs - Older Layers

The process as described in Example 9, above, is repeated, using eggs obtained from layers past peak production. The results obtained using eggs from these different aged layers is compared to the results achieved in Example 9.

### EXAMPLE 11

### Microbial Contamination Levels During Refrigerated Storage

Eggs treated as described in Examples 9 and 10, above, are held in commercial refrigerated walk-in coolers, at an ambient temperature of about 45°F. Microbial load of eggs (CO₂, N₂ and TC treated; intact, checked and cracked; from older and younger flocks) is investigated over an extended storage period of up to 4 weeks or more, to 15 weeks.

Use of the cryogenic CO₂ rapid cooling method reduces the microbial load in the interior of a raw shell egg, compared to the microbial load that would be expected prior to CO₂ treatment. That is, the use of CO₂ rapid cooling results in the destruction of a percentage of microorganisms, thus reducing the increase in microorganisms seen over time, compared to that which would occur without the CO₂ treatment. In this manner, CO₂ rapid cooling of processed raw shell eggs results in at least a one-log reduction in the microbial load of the raw shell eggs. A beneficial microbial-destruction effect is seen in checked and/or cracked eggs as well as intact eggs. A beneficial effect is also seen in eggs from older layers.

### EXAMPLE 12

### Microbial Contamination Levels During Refrigerated Storage

Fresh eggs are inoculated with *Salmonella* and are then subjected to CO₂ cryogenic cooling or traditional cooling treatments (TC). Following treatment, surviving *Salmonella* are enumerated.

*Salmonella enteritidis,* strains Benson, Rochester and Puerto Rico that are resistant to nalidixic acid are inoculated into eggs at the inner shell membrane, center

### EXAMPLE 13

### Inoculation of Shell Eggs - Experiment I

### Inoculation Protocol:

Eggs were obtained from an Auburn University laying flock within 12 h of lay. A composition suspension of *Salmonella enteritidis* strains Benson, Puerto Rico, Rochester (provided by N. A. Cox, USDA-ARS, Athens, GA), all four being naladix acid resistant, were injected (2.1 x 10⁸ cfu/ml of egg) into eggs and inoculum (50 µl) was deposited at two different loci: center albumen, next to yolk, and center of yolk. An area approximately 10 mm located in the geometric center along the equatorial axis of each was disinfected by applying 95 % ethanol with a sterile cotton swab. Inoculation was accomplished by perforating the eggshell using a 2.54 cm/23-gauge sterile needle, coupled with a 50 µl repeating syringe (Hamilton Co., Reno, NV, USA). After inoculation, the shell was sealed using a droplet of DURO™ Super Glue (Loctite Corp., Cleveland, OH, USA).

### Cooling Protocols:

Following the inoculation protocol (above), after the droplet of glue had dried, traditional cooled eggs were placed in styrofoam cartons and placed into a low temperature incubator (Model MIR 252, Sanyo, Inc.). Egg cooling data collected from actual table egg processing plants (Anderson et al., (1992) North Carolina Extension Report Vol. 1, ER-1) were used to establish cooling curves for eggs cooled using a traditional cooling curve. This was achieved by placing eggs into the low temperature incubator in which the temperature was 25.5°C on day 1, 18.3 °C on day 2, 12.8 °C on day 3, 11.1 °C on day 4, and 7.0°C on day 15, at which the temperature remained until the end of the study. Eggs cooled cryogenically were placed into traditional cardboard flats (2.5 dozen) before being placed into a cryogenic cooler provided by Praxair (Burr Ridge, IL). Cryogenically cooled eggs were cooled to approximately 7°C in about 6 minutes with gaseous CO₂, then placed in styrofoam cartons before being placed in a low temperature incubator at about 7°C for 15 days.

### Microbial Testing:

On each testing day, five eggs from each treatment group were dipped in absolute ethanol and allowed to air dry. Egg contents were collected aseptically into sterile sampling bags (Fisher, Pittsburgh, PA) and stomached for two min. One ml was removed from each bag and placed into nine ml of buffer peptone water (BPW) before being spiral plated using a DU2 plater (Spiral System Instruments, Inc., Bethesda, MD) onto brilliant green sulfur (BGS, Difco) containing 200 ppm Nalidix acid. Plates were incubated at 37 °C for 24 hours before being counted.

### EXAMPLE 14

### Inoculation of Shell Eggs - Experiment II

### Inoculation and Cooling Protocols:

Eggs in Experiment II were inoculated near the center of the albumen with approximately 500 cfu of *S. enteritidis* in 50 µl of sterile BPW in the same manner as Eggs in Experiment I (Example 13). Eggs were then held for ten hours at room temperature (23 °C) before being subjected to the same cooling methods as described in Experiment I (Example 13). Eggs were stored for up to 14 weeks.

### Microbial Testing:

*S. enteritidis* was enumerated from each treatment day 1 and at weeks 2, 4, 6, 8, 10, 12 and 14. At day 0, all eggs were tested using three tube most probable numbers (MPN, FDA, 1998). Three eggs from each treatment group were removed and dipped in absolute ethanol and allowed to air dry. Eggs were then cracked and the contents were placed in sterile sampling bags (Fisher, Pittsburgh, PA). After egg contents were stomached for two min, ten ml were pipetted into three tubes containing 10 ml of 2X BPW, one ml of egg content was pipetted into three tubes containing nine ml of BPW, one ml was removed from these tubes and placed into three additional tubes containing nine ml BPW. All tubes were incubated at 37 °C for 24 hours. One ml from each tube was then pipetted into ten ml of tetrathionate broth (Difco) and incubated another 24 hours at 42 °C before being streaked on BGS (Difco) plates containing 200 ppm nalidix acid. Plates were incubated at 37 °C for 24 hours before being examined for typical *Salmonella* colonies. At week 2, cryogenically cooled eggs were tested using the same three tube MPN procedure. All other eggs tested through end of study were sampled and analyzed using the enumeration method as described for Experiment I (Example 13).

### EXAMPLE 15

### Results of Inoculation Studies with Shell Eggs

Results obtained from the experiments described in Examples 13 and 14 were expressed log₁₀ cfr/ml and analyzed suing the General Linear Models procedure (SAS institute, 1997). For Experiment I (Example 13), a 2x6x2 (site of inoculation x storage time x cooling method) factorial arrangement was utilized. In Experiment II (Example 14), a 2x8 (cooling method x storage time) arrangement was used. Treatment means were compared by the LS Means test. means were separated using Tukeys test. Significance was set at p≤0.05.

### Experiment I:

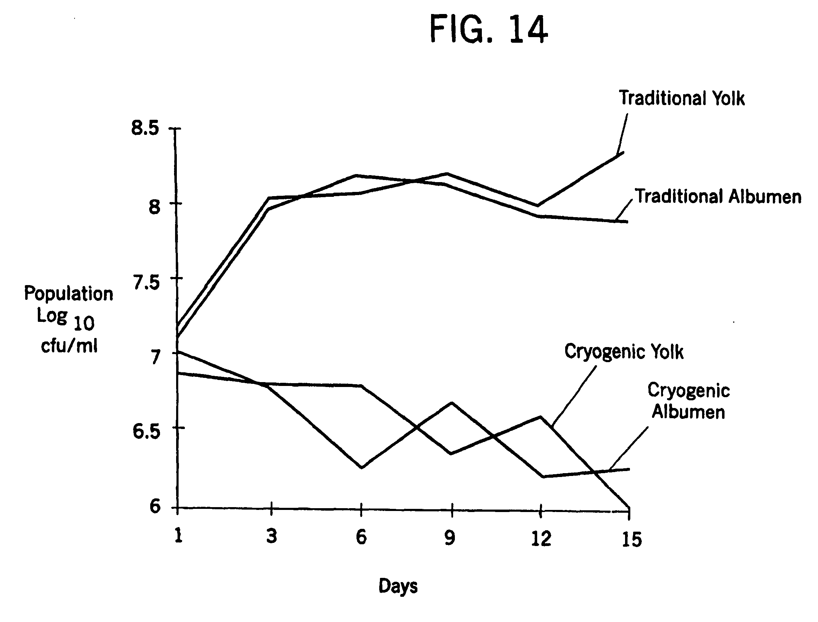

Site of inoculation had no effect (p > 0.05) on the growth and survivability of *S. enteritidis*, whereas the site of inoculation, method of cooling, and storage time interacted to affect (p<0.001) *S. enteritidis* populations (**Table V**)**.** Eggs in which yolk was inoculated and cooled traditionally (TY) had a population of 7.18 log₁₀ cfu/ml after one day of storage. This population increased gradually to 8.34 log₁₀ cfu/ml on day 15. Eggs that were cooled in the same manner but inoculated in the albumen (TA) had a population of 7.12 log₁₀ cfu/ml after one day of storage, and this increased to 7.9 log₁₀ cfu/ml by day 15 (**Figure 14**).

Eggs cooled cryogenically exhibited a gradual decrease in the number of *S. enteritidis* over time. When eggs were inoculated in the yolk and cooled cryogenically (CY), the population of *S. enteritidis* was 6.88 log₁₀ cfu/ml at one day of storage, and decreased to 6.00 log₁₀ cfu/ml by day 15. Eggs cooled cryogenically and inoculated in the albumen (CA) had a population of 7.02 log₁₀ cfu/ml at one day of storage, and the *S. enteritidis* population of these eggs decreased to 6.26 log₁₀ cfu/ml by day 15 (**Figure 14**).

### Experiment II:

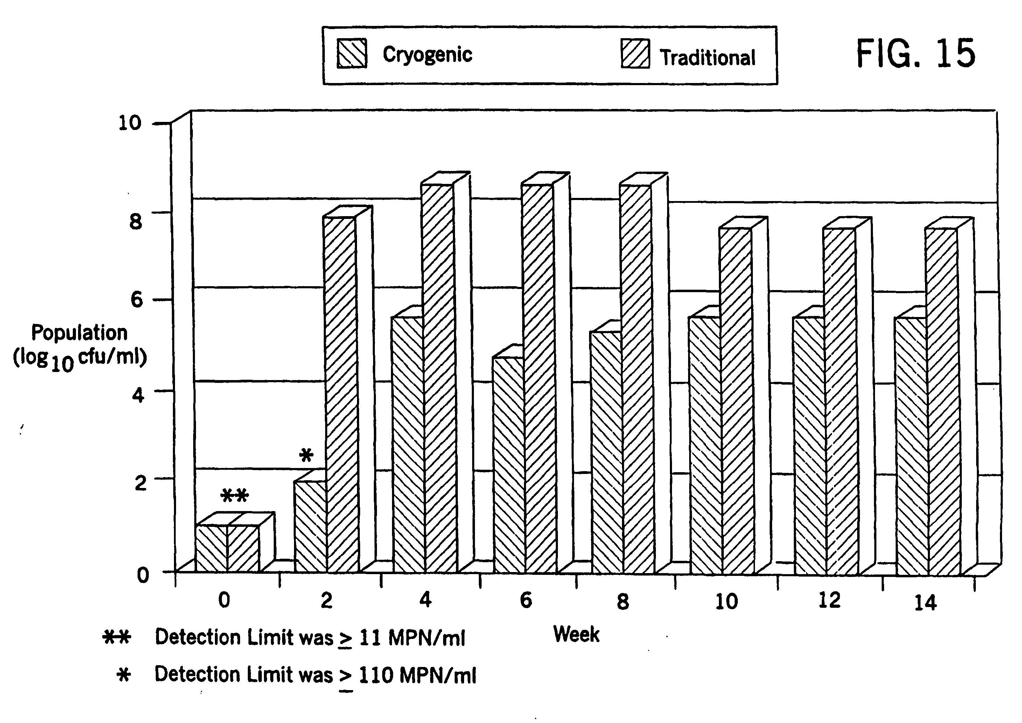

Cooling method and storage time interacted to affect (p < 0.001) *S. enteritidis* population (**Figure 15**). Eggs that were traditionally cooled had an increase of 4.83 log₁₀ cfu/ml in *s. enteritidis* population from day of inoculation to 2 weeks of storage, while eggs cooled cryogenically only showed a 1.0 log₁₀ cfu/ml increase in bacterial count. Eggs cooled traditionally continued to show a rise in *S. enteritidis* population to week 6 with the highest counts reaching 8.78 log₁₀ cfu/ml. This population decreased to 7.64 log₁₀ cfu/ml by week 14. Eggs cooled cryogenically exhibited an increase in *S. enteritidis* population at week 4, reaching 5.68 log₁₀ cfu/ml, then decreased to 4.84 log₁₀ cfu/ml by week 6. A gradual increase in *S. enteritidis* population was seen until the end of the study, with counts at 5.78 log₁₀ cfu/ml on week 14.

**TABLE V**

| | *S. enieritidis* population (log₁₀ cfu/ml) | | | | |
|---|---|---|---|---|---|
| Site of Inoculation (S) | NS¹ | | | | |
| Yolk | 6.74 | | | | |
| Albumen | 6.88 | | | | |
| Time of Storage (T) | *** | | | | |
| 1 | 6.76 | | B | C | |
| 3 | 7.29 | A | | | |
| 6 | 7.01 | A | B | | |
| 9 | 6.91 | | B | | |
| 12 | 6.62 | | | C | D |
| 15 days | 6.41 | | | | D |
| Cooling Method (C) | *** | | | | |
| Traditional | 7.75 | | | | |
| Cryogenic | 6.24 | | | | |
| Interactions | | | | | |
| SxT | *** | | | | |
| SxC | *** | | | | |
| TxC | *** | | | | |
| SxTxC | *** | | | | |

| | | | | | |
|---|---|---|---|---|---|
| ¹NS = not significant (p≥0.05) | | | | | |
| * = p≤0.05 ** = p≤0.01 *** = p≤0.001 | | | | | |

### EXAMPLE 16

### Egg Quality

### Cooling and Storage of Shell Eggs in CO₂ -- Methods

This study evaluated the effect of rapid cooling and cryogenic storage on shell egg quality. There were three experimental groups: air cooled and stored (control), air cooled and CO₂ stored, and CO₂ cooled and stored.

### CO₂ Cooled Eggs:

Ninety-six eggs were heated in an incubator at 47 °C for 24 hours. These eggs were cooled in an insulating chamber, approximately 1.5m x 1.0m x 1.5m to 45 °F. The freezer used liquid CO₂ under pressure to cool the box to -50°C and maintain a CO₂ rich (>92%) environment. The single rack held 4 flats, 2 in front and 2 in back. A fan underneath the rack circulated the CO₂ during cooling. The eggs were cooled for 7 minutes at -50 to -40 °C. After cooling, the eggs were placed in jars, 24 at a time, in 250 ml glass jars. An O, sensor was inserted into each jar as it was filled with UHP grade (99.9999%) CO₂. When the O₂ level in the jar was less than 1.0% O₂, the jar was sealed with a screw-type lid. The lids, equipped with a rubber septum for syringe sampling, have a permanent rubber gasket on the inside to produce a tight seal with the jar. The jars were then placed in refrigeration at 5 °C.

### Air Cooled and Control Eggs:

One hundred and forty-four eggs were heated in the same manner as the CO₂ cooled eggs. The eggs, on six flats, were placed in a freezer at -20°C. The flats were arranged in 2 columns of 3 flats each. A 21 inch box fan was placed in front of the 2 columns and turned on to circulate the cold air over the eggs for 14 minutes. The eggs were then removed and 96 were sealed in CO₂ filled jars in the same manner as the CO₂ cooled eggs. The remaining 48 eggs were sealed in air filled jars and constituted the control group.

### Gas Sampling:

A sample of atmosphere inside the jar was taken using a one ml tuberculin syringe. First, the syringe was flushed with helium and then inserted into the jar through the rubber septum in the metal lid. A one ml gas sample was drawn and tested in the Fisher Gas Partitioner Model 1200 (Pittsburgh, PA). The egg was removed from the jar and held to an egg candler where the air cell was identified and outlined in pencil on the shell. SUPERGLUE™ was used to attach a rubber septum to the shell directly above the air cell. A one ml Hamilton gas tight syringe was flushed with helium and then inserted through the septum into the air cell. A sample (0.5 ml) was drawn and analyzed.

### Haugh Units:

Eggs were weighed and cracked out onto a breakout table. A Haugh unit analyzer (Technology Services and Supplies, Dunnington, England) was used to measure albumen height and to calculate Haugh units.

### pH:

The albumen was separated and the yolk discarded. The albumen was placed in an 8-ounce plastic WHIRL-PAK™ bag. The albumen was mixed by hand and the pH was measured using an Orion Research, Inc. (Boston, MA) model 250A pH meter and low maintenance pH triode. pH was only measured for the first 5 eggs of each group per set of samples.

### CO₂ Analysis:

Three to 5 grams of albumen were placed in a clean 250 ml glass jar. The exact mass was recorded. Next, a small open vial containing 5.0 ml of NaOH was placed in the jar with the albumen. The jar was sealed with a metal screw-type lid, the same as was used for storage (with rubber seal and septum). Ten ml of a low pH (< 1.0) acid phosphate solution was injected onto the albumen with a syringe through the septum in the lid. The jar was heated at 40 °C for 24 hours. During this time, all of the CO₂ in the albumen reacted with the NaOH in the vial. The vial was removed and titrated with HCl to determine the amount of CO₂ that was in the albumen.

### Statistics:

ANOVA analyses were performed on all sets of data and a t-test mean comparison was used to determine statistical significance between sample means. All comparisons indicated statistically significant had a p < 0.05.

### EXAMPLE 17

### Egg Quality

### Cooling and Storage of Shell Eggs in CO₂ - Results

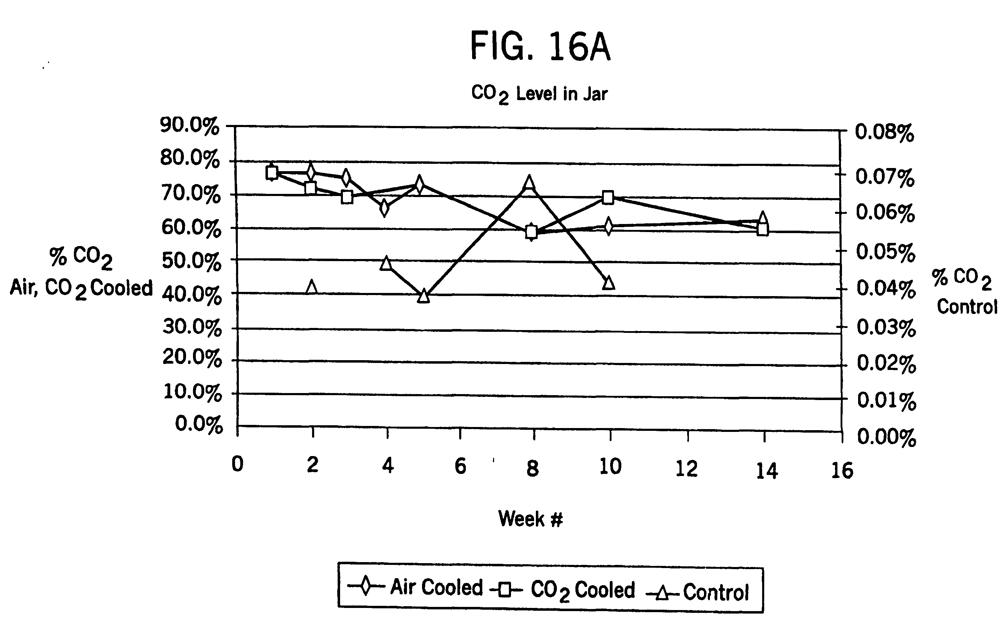

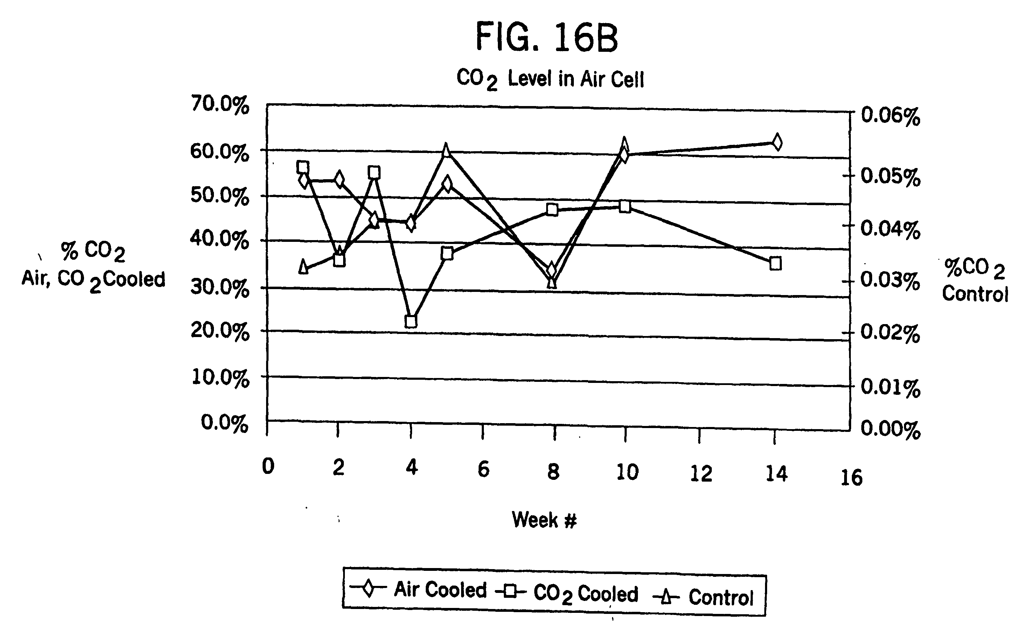

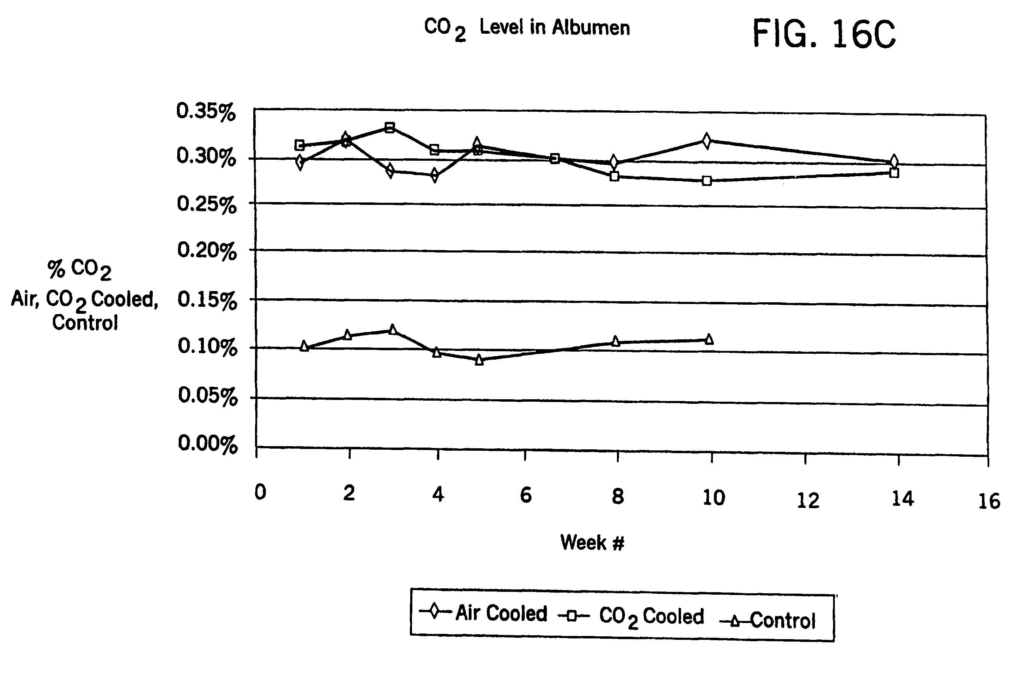

As shown in **Figure 16,** both the air cooled and CO₂ cooled eggs were stored in sealed jars with approximately 75% CO₂ over the entire 14 weeks (**Figure 16A**). The control eggs were stored in open containers with approximately 0.04% CO₂ present (**Figure 16A**). The CO₂ level in the air cell fluctuated from 35% to 65% over the storage period (**Figure 16B**). However, no clear trends were present. The CO₂ level in the albumen remained constant at 0.30% in the CO₂ stored eggs and 0.10% in the air stored eggs (**Figure 16C**). The air stored eggs remained viable for only 10 weeks. Mold growth and spoilage limited their shelf life. The CO₂ stored eggs were still in very good condition at 14 weeks, with no signs of spoilage or breakage.

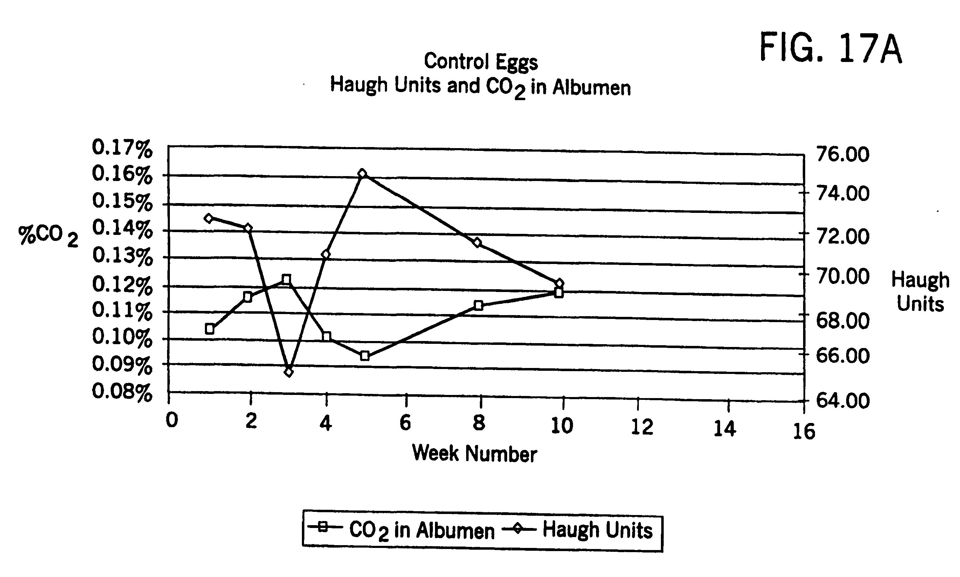

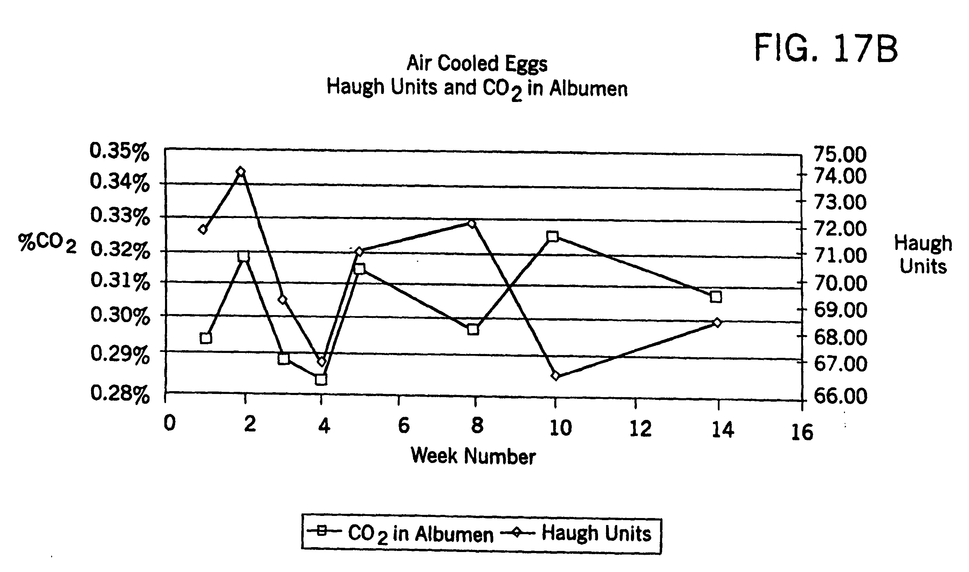

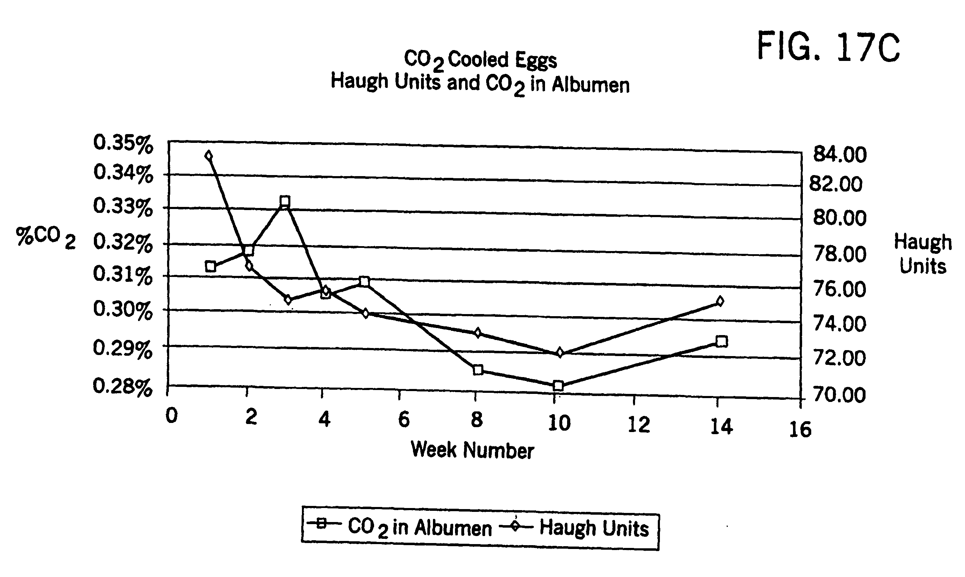

The quality results (*i*.*e*., Haugh units) are presented in **Figure 17.** The CO₂ level in the control egg albumen was 0.1% on average over the 10 week shelf life, but Haugh units fluctuated between 74 and 65 with no clear trends (**Figure 17A**). For the air cooled-CO₂ stored eggs, the CO₂ level in the egg averaged 0.30%, but Haugh units fluctuated between 66 and 74 with no clear trends (**Figure 17B**)**.** For the CO₂ cooled-CO₂ stored eggs, the CO₂ level in the albumen started at 0.31% and decreased to 0.29% at 14 weeks (**Figure 17C**). On average, the CO₂ level over the 14 weeks was approximately 0.3%. The Haugh units followed a similar trend. At week one, the Haugh unit were 83 and decreased to 75 at 14 weeks. On average, Haugh unit were statistically higher in the CO₂ cooled-CO₂ stored eggs (74) as compared to the air cooled-CO₂ stored eggs (70) and air cooled-air stored eggs (70). This result suggests that Haugh units are increased in eggs that are CO₂ cooled and CO₂ stored.

pH was 9.2 for air cooled and air stored eggs and between 6.5 and 7.0 for all CO₂ stored eggs.

In sum, rapid air cooling produces a lower quality egg than cryogenic cooling with CO₂. CO₂ cooling and subsequent storage in CO₂ statistically improves quality and shelf life of shell eggs (> 14 weeks).

### EXAMPLE 18

### Inoculation Studies -Storage Time and Site of Inoculation - Methods

Eggs obtained from an Auburn University laying flock within 3 hours of lay were stored at 7 °C. At 0, 7, 14 or 28 days of storage, a composition suspension of *Salmonella enteritidis* strains Benson, Puerto Rico, and Rochester (provided by N.A. Cox, USDA-ARS, Athens, GA) was injected into eggs and deposited (500 cfu) at three different loci: outer albumen, inner albumen next to yolk, and center of yolk. An area approximately 10 mm located in the geometric center along the equatorial axis of each was disinfected by applying 95 % ethanol with a sterile cotton swab. A droplet of SUPERGLUE™ (Loctite Corp., Cleveland, OH) was placed on the area after the ethanol had dried. A 9.5 mm diameter rubber septum was then affixed to each egg at the site of the glue droplet and allowed to air dry. After the glue was dried, the top of the rubber septum was disinfected with 95% ethanol. The site of inoculation was determined using a high intensity candler. Inoculation was accomplished by perforating the septum and eggshell using a 2.54 cm/23-gauge sterile needle, coupled with a 50 µl repeating syringe (Hamilton Co., Reno, NV).

Following injection, eggs were stored at 7 °C for 0, 7, 14, 21 or 28 d; however, the groups stored for 28 d were subjected to 37 °C for 24 h immediately prior to sampling. Four eggs were sampled from each injection site group/pre-inoculation storage treatment group at each post-injection time. Egg contents were aseptically collected into sterile sampling bags (Fisher, Pittsburgh, PA) and stomached for two minutes. One ml was removed and placed into nine ml of sterile buffer peptone water (BPW, Difco, Detroit, MI). Serial dilutions were performed as needed using nine ml of BPW before being spiral plated on tryptic soy agar (TSA, Difco) using a DU2 plater (spiral system Instruments, Inc.. Bethesda, MD). Plates were incubated at 37 °C for 24 hours before counting colonies.

### EXAMPLE 19

### Inoculation Studies -Storage Time and Site of Inoculation - Results

A study was carried out as described in Example 18. Data were expressed as log₁₀ cfu/ml, and were analyzed using the General Linear Models procedure (SAS Institute, 1997). A 4x3x4 (pre-inoculation time x site of inoculation x post-inoculation time) factorial arrangement was utilized. Treatment means were compared by the LS Means test. Means were separated using Tukeys test.

Pre-inoculation time, as well as site of inoculation, had little effect on the growth of *S. enteritidis* as long as eggs were stored at 7 °C. No growth occurred in eggs held up to 21 days post-inoculation at 7 °C (data not shown). However, when temperature abuse occurred on day 27, *S. enteritidis* increased in number in all tested components on day 28 post-inoculation.

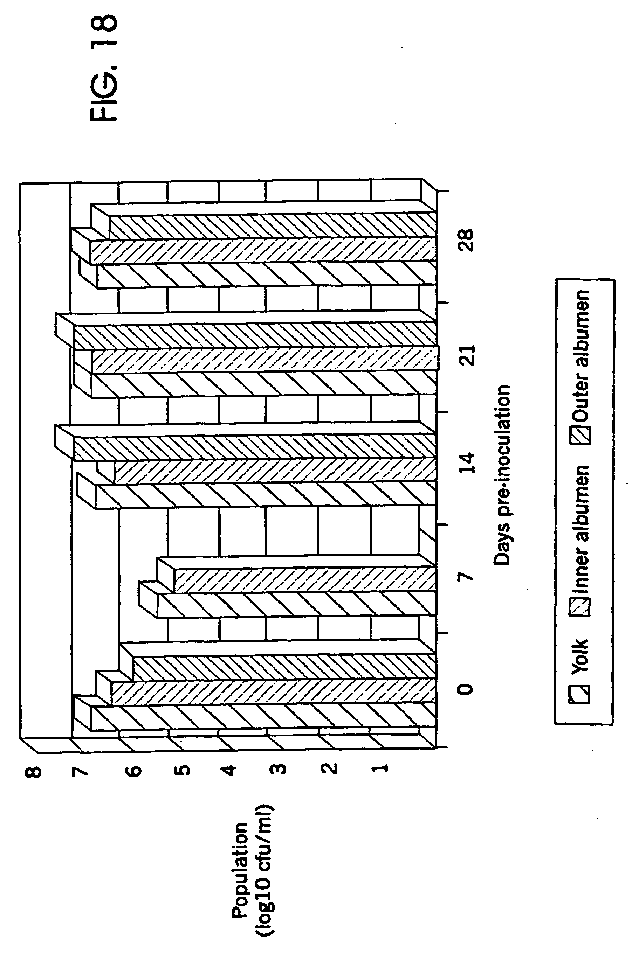

All data presented (**Figure 18**) are taken from eggs that had been exposed to temperature abuse on day 26. *Salmonella* populations in eggs inoculated in the yolks on 0 day were 6.9 log₁₀ cfu/ml. The eggs from this group inoculated in the outer albumen area had the lowest counts of 6.0 log₁₀ cfu/ml. Eggs which had been stored for seven days pre-inoculation with *S. enteritidis* deposited in the yolk and inner albumen had a population of 5.6 log₁₀ cfu/ml and 5.2 log₁₀ cfu/ml, respectively. No growth (< 10 cfu/ml) was detected in eggs inoculated in the outer albumen. For eggs stored 14 d pre-inoculation, the group inoculated in the outer albumen had the highest counts of 7.3 log₁₀ cfu/ml. Eggs inoculated in the yolk and inner albumen had populations of 6.8 log₁₀cfu/ml. Eggs inoculated in the yolk and inner albumen had populations of 6.8 log₁₀cfu/ml and 6.4 log₁₀ cfu/ml, respectively. *S. enteritidis* populations in eggs inoculated in the outer albumen which had been stored 21 d pre-inoculation showed no differences from eggs stored 14 d pre-inoculation. Eggs from the same group where *S. enteritidis* was deposited in the yolk and inner albumen both had a slight increase in counts of 6.9 log₁₀ cfu/ml. Eggs which had been stored 28 d pre-inoculation with *S.* *enteritidis* deposited in the inner albumen had a population of 7.0 log₁₀ cfu/ml. If the *S. enteritidis* was deposited in the yolk, the counts were 6.8 log₁₀cfu/ml. The population of *s. enteritidis* was 6.5 log₁₀ cfu/ml in eggs where the bacterium was deposited in the outer albumen.

This study demonstrates that when shell eggs are subjected to temperature. *S. enteritidis* is able to multiply, increasing the chance of food poisoning if the egg is not properly cooked.

### EXAMPLE 19

### Inoculation Studies - Cooling and Storing Eggs in CO₂

Subsets of each group of eggs are inoculated with *S. enteritidis* at various sites within the egg and then stored for various periods of times as described in Example 17. Eggs are air cooled and air stored, CO₂ cooled and air stored, or CO₂ cooled and CO₂ stored as described in Example 16 following inoculation. After 28 days of storage, eggs are subjected to temperature abuse at 37°C for 24 hours as described in Example 17. *S. enteritidis* contamination in each group of eggs is determined as described in Example 17. Results are compared among treatment groups. Microbial contamination following temperature abuse is highest in the air cooled -air stored group and lowest in the CO₂ cooled - CO₂ groups, and intermediate for the air cooled-CO₂ stored group. Microbial load is also determined for each group of eggs at various times post-inoculation as described in Example 17.

## Claims

1. A method of improving the average quality of a plurality of raw shell eggs, comprising:
exposing the shell eggs to cryogenic carbon dioxide (CO₂) gas for a time and temperature sufficient to cool the interior temperature of the shell eggs to about 7.3°C (45°F) or less, but insufficient to cause freezing of the egg yolk or albumen, wherein said exposure to cryogenic CO₂ gas occurs for a time period of not more than ten minutes, wherein said shell eggs are obtained from hens of at least 50 weeks of age.

2. The method according to claim 1, wherein at least a one-log reduction in microorganisms is achieved in the number of microorganisms in the shell eggs.

3. The method according to claim 2, wherein at least a three-log reduction is achieved in the number of microorganisms contained in the shell eggs.

4. The method according to any preceding claim wherein at least some of the eggs have cracked shells but intact egg membranes.

5. The method according to any preceding claim, wherein the shell eggs are stored at a temperature of about 5°C (41°F) to about 7.3°C (45°F) for essentially the entire storage period.

6. The method according to claim 5, wherein the storage period is at least four weeks.

7. The method according to claim 6, wherein the storage period is of from between about four to about eight weeks.

8. The method according to claim 6, wherein the storage period is of from between about eight to about twelve weeks.

9. The method according to any preceding claim, further comprising the step of storing the shell eggs in gaseous carbon dioxide.

## Patentansprüche

1. Verfahren zum Verbessern der durchschnittlichen Qualität einer Vielzahl von rohen Schaleneiern, umfassend:
die Schaleneier kryogenem Kohlendioxidgas (CO₂-Gas) über einen Zeitraum und bei einer Temperatur aussetzen, die ausreichen, um die Innentemperatur der Schalencier auf etwa 7,3 °C (45 °F) oder weniger zu kühlen, jedoch nicht ausreichen, um ein Gefrieren des Eidotters oder Eiklars herbeizuführen, wobei das Kryogenem-CO₂-Gas-Aussetzen über einen Zeitraum von nicht mehr als zehn Minuten erfolgt, wobei die Schaleneier von Hennen mit einem Alter von mindestens 50 wochen erhalten werden.

2. Verfahren gemäß Anspruch 1, wobei eine Reduktion der Mikroorganismen um mindestens eine Logstufe bei der Anzahl von Mikroorganismen in den Schaleneiern erzielt wird.

3. Verfahren gemäß Anspruch 2, wobei eine Reduktion der Anzahl von in den Schaleneiern enthaltenen Mikroorganismen um mindestens drei Logstufen erzielt wird.

4. Verfahren gemäß einem beliebigen der vorangehenden Ansprüche, wobei mindestens einige der Eier Risse aufweisende Schalen, jedoch intakte Eimembrane aufweisen.

5. Verfahren gemäß einem beliebigen der vorangehenden Ansprüche, wobei die Schaleneier im Wesentlichen während des gesamten Lagerzeitraums bei einer Temperatur von etwa 5 °C (41 °F) bis etwa 7,3 °C (45 °F) gelagert werden.

6. Verfahren gemäß Anspruch 5, wobei der Lagerzeitraum mindestens vier wochen beträgt.

7. Verfahren gemäß Anspruch 6, wobei der Lagerzeitraum zwischen etwa vier und etwa acht Wochen beträgt.

8. Verfahren gemäß Anspruch G, wobei der Lagerzeitraum zwischen etwa acht und etwa zwölf Wochen beträgt.

9. Verfahren gemäß einem beliebigen der vorangehenden Ansprüche, ferner umfassend den Schritt des Lagerns der Schaleneier in gasförmigem Kohlendioxid.

## Revendications

1. Procédé d'amélioration de la qualité moyenne d'une pluralité d'oeufs crus en coquille, comprenant :
l'exposition des oeufs en coquille à du dioxyde de carbone (CO₂) cryogénique pendant un certain temps et à une température, suffisants pour refroidir la température intérieure des oeufs en coquille pour qu'elle atteigne environ 7,3°C (45°F) ou moins, mais insuffisants pour provoquer la congélation du jaune ou du blanc d'oeuf, dans lequel ladite exposition au CO₂ cryogénique gazeux a lieu pendant une période de temps de maximum dix minutes, et dans lequel lesdits oeufs en coquille sont obtenus à partir de poules âgées d'au moins 50 semaines.

2. Procédé selon la revendication 1, dans lequel une réduction de microorganismes d'au moins un log est obtenue dans le nombre de microorganismes dans les oeufs en coquille.

3. Procédé selon la revendication 2, dans lequel une réduction de microorganismes d'au moins trois log est obtenue dans le nombre de microorganismes contenu dans les oeufs en coquille.

4. Procédé selon l'une quelconque des revendications précédentes dans lequel au moins certains des oeufs ont leurs coquilles fêlées mais leurs membranes sont intactes.

5. Procédé selon l'une quelconque des revendications précédentes, dans lequel les oeufs en coquille sont conservés à une température d'environ 5°C (41°F) à environ 7,3°C (45°F) pendant essentiellement la totalité de la période de conservation.

6. Procédé selon la revendication 5, dans lequel la période de conservation est d'au moins quatre semaines.

7. Procédé selon la revendication 6, dans lequel la période de conservation est d'environ quatre à environ huit semaines.

8. Procédé selon la revendication 6, dans lequel la période de conservation est d'environ huit à environ douze semaines.

9. Procédé selon l'une quelconque des revendications précédentes, comprenant en outre l'étape consietant à conserver les oeufs en coquille dans du dioxyde de carbone gazeux.
